# EUROPEAN PATENT APPLICATION

(11) **EP 4 651 408 A1**
(43) Date of publication of application: **19.11.2025**
(21) Application number: 23922459.5
(22) Date of filing: 06.12.2023
(51) Int. Cl.: H04L 1/00

(54) **DATA SENDING METHOD, DEVICE, AND SYSTEM IN ETHERNET**

(30) Priority: 14.02.2023 CN 202310149106; 03.03.2023 CN 202310247349
(71) Applicant: Huawei Technologies Co., Ltd., Shenzhen, Guangdong 518129 (CN)
(72) Inventor: REN, Hao, Shenzhen, Guangdong 518129 (CN); HE, Xiang, Shenzhen, Guangdong 518129 (CN)
(74) Representative: Huawei European IPR
(86) International application number: PCT/CN2023/136718
(87) International publication number: WO 2024/169343

(57) **Abstract**

A data sending method, a device, and a system are provided. A PMA sublayer of an Ethernet device obtains a FEC encoded data stream, and performs a first data processing process on the data stream, to obtain an interleaved data stream, where the first data processing process includes performing interleaving in a first interleaving manner, and an interleaving type of the first interleaving manner is specifically symbol interleaving or convolutional interleaving. According to this application, functions of the PMA sublayer can be extended, to meet a requirement for reducing a BER in a high-rate Ethernet data transmission scenario.

## Description

This application claims priorities to Chinese Patent Application No. 202310149106.7, filed on February 14, 2023 and entitled "ETHERNET PHYSICAL LAYER DATA PROCESSING METHOD", and to Chinese Patent Application No. 202310247349.4, filed on March 3, 2023 and entitled "DATA SENDING METHOD, DEVICE, AND SYSTEM IN ETHERNET", which are incorporated herein by reference in their entireties.

### TECHNICAL FIELD

This application relates to the communication field, and in particular, to a data sending method, a device, and a system in Ethernet.

### BACKGROUND

In an Ethernet data transmission process, due to various factors such as environmental interference and system errors, data received by a data receiver is inconsistent with data sent by a data transmitter. That is, a bit error is inevitable. Currently, a bit error rate (bit error rate, BER) can be reduced by using forward error correction (Forward Error Correction, FEC), an interleaver (interleaver), and other means.

However, an existing manner of performing interleaving by a physical coding sublayer (physical coding sublayer, PCS) cannot meet requirements in the case of an increase in a data transmission rate.

### SUMMARY

A data sending method, a device, and a system are provided, to resolve a problem that a technical means for reducing a BER cannot meet requirements due to an increase in a data transmission rate.

According to a first aspect, a data sending method is provided. The method is performed by an Ethernet device. The Ethernet device may be an Ethernet chip, an Ethernet forwarding device such as a switch or a router, and a pluggable optical module or electrical module in Ethernet. When the Ethernet device is used as a data sending side, a physical medium attachment (physical medium attachment, PMA) sublayer of the Ethernet device obtains a FEC encoded data stream, and performs a first data processing process on the data stream, to obtain an interleaved data stream (interleaved data stream). The first data processing process includes performing interleaving in a first interleaving manner, and an interleaving type of the first interleaving manner is specifically symbol interleaving (symbol interleave) or convolutional interleaving (convolutional interleave). The data stream obtained by the PMA sublayer may be one data stream or a plurality of data streams, and a quantity of data streams is related to a quantity of data lanes between the PMA sublayer and a previous sublayer. Further, the interleaving may be interleaving within one data stream, or may be interleaving between a plurality of data streams. In addition, the interleaved data stream may alternatively be one data stream or a plurality of data streams.

In this application, the PMA sublayer on the data sending side performs symbol interleaving or convolutional interleaving on the data stream, and a specific manner of performing interleaving by the PMA sublayer may be flexibly designed, to ensure that an actual requirement for reducing a BER in a network is met. In addition, because extension of the PMA sublayer is relatively simple, an existing PCS does not need to be modified in a design of the PMA sublayer, and even when the PMA sublayer is located in a pluggable module, a master chip of an existing Ethernet physical PHY layer does not need to be modified in the design of the PMA sublayer, so that a requirement for reducing a BER in a high-rate data transmission scenario is met while research and development costs are reduced as much as possible.

In a possible implementation, the PMA sublayer performs symbol interleaving at a granularity of 10 bits, or the PMA sublayer performs 10-bit symbol interleaving. The 10-bit symbol interleaving is consistent with an existing granularity at which the PCS performs interleaving, and a BER can be effectively reduced through the symbol interleaving at the granularity.

In a possible implementation, the first data processing process performed by the PMA sublayer on the data stream further includes bit multiplexing (bit mux) or symbol-group multiplexing (symbol-group mux). A granularity of the bit multiplexing is 1 bit, and a granularity of the symbol-group multiplexing may be 20 bits or 40 bits. Through the bit multiplexing or the symbol-group multiplexing, a quantity of data streams output by the PMA sublayer can adapt to a quantity of data lanes between the PMA and a next sublayer in a data transmission direction. Optionally, processing of the bit multiplexing or the symbol-group multiplexing may be performed after the foregoing processing of performing interleaving in the first interleaving manner, or the processing of the bit multiplexing or the symbol-group multiplexing may be included in the foregoing processing process of performing interleaving in the first interleaving manner.

In a possible implementation, the first data processing process performed by the PMA sublayer on the data stream further includes bit demultiplexing (bit demux) or symbol-group demultiplexing (symbol-group demux). A granularity of the bit demultiplexing is 1 bit, and a granularity of the symbol-group demultiplexing may be 20 bits or 40 bits.

In a possible implementation, the first data processing process performed by the PMA sublayer on the data stream further includes alignment marker (alignment marker, AM) lock and deskew (deskew).

The data stream obtained by the PMA sublayer is from the previous sublayer in the data transmission direction, and the previous sublayer may be, for example, a PCS, a data terminal equipment extension sublayer (data terminal equipment extender sublayer, DTE_XS), or another PMA sublayer. Through the bit demultiplexing or the symbol-group demultiplexing and the alignment marker lock and deskew, the data stream from the previous sublayer may be restored. Optionally, processing of the bit demultiplexing or the symbol-group demultiplexing and the alignment marker lock and deskew may be performed before the foregoing processing of performing interleaving in the first interleaving manner. That is, the data stream from the previous sublayer is restored, and subsequent interleaving is then performed.

In a possible implementation, the data stream obtained by the PMA sublayer is a data stream obtained by performing a second data processing process, and the second data processing process includes performing interleaving in a second interleaving manner. That is, the data stream obtained by the PMA sublayer may be a data stream on which the interleaving has been performed. The second data processing process may be performed by another sublayer before the PMA sublayer, for example, may be performed by a PCS or a DTE_XS. In addition, the sublayer that performs the second data processing process may be directly adjacent to the PMA sublayer, or may be not directly adjacent, that is, the sublayer and the PMA sublayer are separated by another sublayer. That is, there is no conflict between the interleaving performed by the PMA sublayer and interleaving performed by the another sublayer that is previous. Therefore, data processing manner of the existing another sublayer does not need to be modified, and the existing Ethernet device is compatible.

In a possible implementation, an interleaving depth of the first interleaving manner is different from that of the second interleaving manner. To be specific, an interleave change (interleave change) is performed through the interleaving performed by the PMA sublayer. To some extent, it may be considered that the interleaving performed by the PMA sublayer covers the interleaving performed by the another sublayer that is previous. Through this interleave change, a new error correction design can be flexibly implemented at the PMA sublayer, thereby better meeting a requirement for reducing a BER due to an increasing Ethernet data transmission rate, without modifying the another sublayer that is previous, or even without modifying a master chip of an entire Ethernet PHY layer. Specifically, an interleaving depth of the interleaving performed by the PMA sublayer may be different from that of the interleaving performed by the another sublayer that is previous. The interleaving performed by the PMA sublayer can be flexibly designed based on an actual network requirement, to meet a requirement for reducing a BER due to an increasing Ethernet data transmission rate.

In a possible implementation, the interleaving depth of the second interleaving manner is two FEC codewords. For example, when a Reed-Solomon (reed-solomon, RS) codeword is used, the interleaving depth of the second interleaving manner is two RS codewords, namely, 2×RS.

In a possible implementation, the first data processing process may include performing de-interleaving for the second interleaving manner, or the first data processing process may not include performing de-interleaving for the second interleaving manner. Optionally, the de-interleaving for the second interleaving manner may be performed before the interleaving is performed in the first interleaving manner. To be specific, the PMA sublayer first performs de-interleaving for the interleaving performed by the another sublayer that is previous, and interleaving within the PMA sublayer is then performed. In addition, the PMA sublayer may not perform de-interleaving for the interleaving performed by the another sublayer that is previous, and interleaving within the PMA sublayer is directly performed.

In a possible implementation, the interleaving depth of the first interleaving manner is 4×RS. When the interleaving depth increases to 4×RS, it can be ensured that a requirement for reducing a BER in various high-speed Ethernet data transmission scenarios is met, and a post-BER of interleaved data through FEC can meet a network requirement. For example, the depth of 4×RS can at least meet a requirement of reducing a BER in a scenario in which a rate of a single physical lane (physical lane) is 200 gigabits per second Gbps.

In a possible implementation, the Ethernet device may include at least one of the following: a PHY chip, a forwarding device, or a pluggable module.

In a possible implementation, a rate of a single physical lane of the data stream obtained by performing interleaving by the PMA sublayer is 200 Gbps. It is easy to understand that the 200 Gbps is a value that may float within a common range in the art, instead of an accurate value of a lane rate at any moment.

In a possible implementation, a rate of an interface for receiving the data stream by the PMA sublayer is at least one of the following: 200 Gbps or 400 Gbps.

In a possible implementation, the PMA sublayer obtains the data stream through any one of the following interfaces: an attachment unit interface (attachment unit interface, AUI) or a common electrical interface (common electrical interface, CEI). For example, the PMA sublayer may be separated from the previous sublayer on a circuit, and obtain the data stream from the previous sublayer through an interface, where the interface may be the AUI, the CEI, or the like.

In a possible implementation, the PMA sublayer sends the interleaved data stream to a physical medium dependent (physical medium dependent, PMD) sublayer. In the Ethernet device on the sending side, the PMD sublayer is a next sublayer of the PMD sublayer in a data transmission direction.

According to a second aspect, a data receiving method is provided. The method is performed by an Ethernet device. The Ethernet device may be an Ethernet chip, an Ethernet forwarding device such as a switch or a router, and a pluggable optical module or electrical module in Ethernet. After a PMA sublayer of an Ethernet device on a data sending side performs interleaving, a PMA sublayer of an Ethernet device on a data receiving side needs to perform a de-interleaving process accordingly. The PMA sublayer of the Ethernet device on the data receiving side obtains a data stream, and performs a third data processing process on the data stream, to obtain a de-interleaved data stream (de-interleaved data stream). The third data processing process includes performing de-interleaving in a first de-interleaving manner, and a de-interleaving type of the first de-interleaving manner is specifically symbol de-interleaving (symbol de-interleave) or convolutional de-interleaving (convolutional de-interleave). The data stream obtained by the PMA sublayer may be one data stream or a plurality of data streams, and a quantity of data streams is related to a quantity of data lanes between the PMA sublayer and a previous sublayer. Further, the de-interleaving may be de-interleaving within one data stream, or may be de-interleaving between a plurality of data streams.

In this application, the PMA sublayer on the data sending side performs symbol interleaving or convolutional interleaving on the data stream. Correspondingly, the PMA sublayer on the data receiving side performs symbol de-interleaving or convolutional de-interleaving on the data stream. A specific manner in which the PMA sublayer performs de-interleaving may be flexibly designed, to ensure that an actual requirement for reducing a BER in a network is met. In addition, because extension of the PMA sublayer is relatively simple, an existing PCS does not need to be modified in a design of the PMA sublayer, and even when the PMA sublayer is located in a pluggable module, a master chip of an existing Ethernet physical PHY layer does not need to be modified in the design of the PMA sublayer, so that a requirement for reducing a BER in a high-rate data transmission scenario is met while research and development costs are reduced as much as possible.

In a possible implementation, the PMA sublayer performs symbol de-interleaving at a granularity of 10 bits, or the PMA sublayer performs 10-bit symbol de-interleaving.

In a possible implementation, the third data processing process performed by the PMA sublayer on the data stream further includes bit multiplexing (bit mux) or symbol-group multiplexing (symbol-group mux). A granularity of the bit multiplexing is 1 bit, and a granularity of the symbol-group multiplexing may be 20 bits or 40 bits. Through the bit multiplexing or the symbol-group multiplexing, a quantity of data streams output by the PMA sublayer can adapt to a quantity of data lanes between the PMA and a next sublayer in a data transmission direction. Optionally, processing of the bit multiplexing or the symbol-group multiplexing may be performed after the foregoing processing of performing de-interleaving in a third interleaving manner, or the processing of the bit multiplexing or the symbol-group multiplexing may be included in the foregoing processing process of performing de-interleaving in the third interleaving manner.

In a possible implementation, the third data processing process performed by the PMA sublayer on the data stream includes bit demultiplexing (bit demux) or symbol-group demultiplexing (symbol-group demux). A granularity of the bit demultiplexing is 1 bit, and a granularity of the symbol-group demultiplexing may be 20 bits or 40 bits.

In a possible implementation, the third data processing process performed by the PMA sublayer on the data stream includes alignment marker (alignment marker, AM) lock and deskew (deskew).

The data stream obtained by the PMA sublayer is from a previous sublayer in a data transmission direction, and the previous sublayer may be, for example, a PMD sublayer. Through the bit demultiplexing or the symbol-group demultiplexing and the alignment marker lock and deskew, the data stream from the previous sublayer may be restored. Optionally, processing in the first de-interleaving manner may be further implemented in the foregoing processing of the bit demultiplexing or the symbol-group demultiplexing and the alignment marker lock and deskew. That is, through the processing of the bit demultiplexing or the symbol-group demultiplexing and the alignment marker lock and deskew, the data stream from the previous sublayer is restored, and the de-interleaving is implemented.

In a possible implementation, after performing de-interleaving in the third data processing process on the data stream, the PMA sublayer may further re-interleave the de-interleaved data stream in a second interleaving manner, to obtain a re-interleaved data stream. This is to cooperate with the processing of performing de-interleaving by the existing PCS or DTE_XS in the Ethernet device on the receiving side, so that the existing PCS or DTE_XS does not need to be improved, to adapt to an existing PHY chip as much as possible.

In a possible implementation, a de-interleaving depth of the first de-interleaving manner is 4×RS.

In a possible implementation, the Ethernet device may include at least one of the following: a PHY chip, a forwarding device, or a pluggable module.

According to a third aspect, a data receiving method is provided. The method is performed by an Ethernet device. The Ethernet device may be an Ethernet chip, an Ethernet forwarding device such as a switch or a router, and a pluggable optical module or electrical module in Ethernet. After a PMA sublayer of the Ethernet device on a data sending side performs an interleave change, a PMA sublayer of an Ethernet device on a data receiving side needs to perform an interleave change corresponding to the interleave change, to change an interleaving manner of a data stream to an interleaving manner that adapts to a de-interleaving process performed by another sublayer, thereby avoiding modifications to a PHY chip. For example, when the Ethernet PHY chip performs 2×RS de-interleaving on the data stream, the PMA sublayer may change an interleaving manner for an obtained data stream to the 2×RS interleaving, so that the correct data stream can be obtained by performing 2×RS de-interleaving on the data stream by the PHY chip. Specifically, the PMA sublayer of the Ethernet device on the data receiving side obtains a data stream, and performs a third data processing process on the data stream to obtain an interleaved data stream, where the third data processing process includes performing interleaving on the data stream, and an interleaving type of the interleaving is symbol interleaving or convolutional interleaving. The data stream obtained by the PMA sublayer may be one data stream or a plurality of data streams, and a quantity of data streams is related to a quantity of data lanes between the PMA sublayer and a previous sublayer. Further, the interleaving may be interleaving within one data stream, or may be interleaving between a plurality of data streams.

In a possible implementation, the symbol interleaving is performed at a granularity of 10 bits.

In a possible implementation, the interleaved data stream is de-interleaved by a physical coding sublayer PCS or a data terminal equipment extender sublayer DTE _XS.

In a possible implementation, an interleaving depth of the interleaving is 2×RS. When the Ethernet PHY chip performs 2×RS de-interleaving on the data stream, the PMA sublayer may change an interleaving manner for an obtained data stream to the 2×RS interleaving, so that the correct data stream can be obtained by performing 2×RS de-interleaving on the data stream by the PHY chip.

In a possible implementation, the third data processing process includes performing de-interleaving in the first de-interleaving manner. A de-interleaving type of the first de-interleaving manner is specifically symbol de-interleaving or convolutional de-interleaving, to obtain a de-interleaved data stream.

In a possible implementation, the third data processing process includes bit demultiplexing or symbol-group demultiplexing. A granularity of the bit demultiplexing is 1 bit, and a granularity of the symbol-group demultiplexing may be 20 bits or 40 bits.

In a possible implementation, the third data processing process includes alignment marker AM lock and deskew.

The data stream obtained by the PMA sublayer is from a previous sublayer in a data transmission direction, and the previous sublayer may be, for example, a PMD sublayer. Through the bit demultiplexing or the symbol-group demultiplexing and the alignment marker lock and deskew, the data stream from the previous sublayer may be restored. Optionally, processing in the first de-interleaving manner may be further implemented in the foregoing processing of the bit demultiplexing or the symbol-group demultiplexing and the alignment marker lock and deskew. That is, through the processing of the bit demultiplexing or the symbol-group demultiplexing and the alignment marker lock and deskew, the data stream from the previous sublayer is restored, and the de-interleaving is implemented.

In a possible implementation, the third data processing process includes bit multiplexing or symbol-group multiplexing. A granularity of the bit multiplexing is 1 bit, and a granularity of the symbol-group multiplexing may be 20 bits or 40 bits. Through the bit multiplexing or the symbol-group multiplexing, a quantity of data streams output by the PMA sublayer can adapt to a quantity of data lanes between the PMA and a next sublayer in a data transmission direction. Optionally, processing of the bit multiplexing or the symbol-group multiplexing may be performed after the foregoing processing of performing de-interleaving in a third interleaving manner, or the processing of the bit multiplexing or the symbol-group multiplexing may be included in the foregoing processing process of performing de-interleaving in the third interleaving manner.

In a possible implementation, the Ethernet device includes at least one of the following: a physical layer PHY chip, a forwarding device, or a pluggable module.

According to a fourth aspect, an Ethernet device is provided, including at least one module. The at least one module is configured to perform the method provided in any one of the first aspect or the optional manners of the first aspect; or the at least one module is configured to perform the method provided in any one of the second aspect or the optional manners of the second aspect; or the at least one module is configured to perform the method provided in any one of the third aspect or the optional manners of the third aspect. The at least one module may be implemented based on software, hardware, or a combination of software and hardware, and the module may be randomly combined or divided based on specific implementation.

According to a fifth aspect, an Ethernet device is provided, including a memory and a processor. The memory is configured to store a computer program, and the processor is configured to execute the computer program stored in the memory, to enable the Ethernet device to perform the method provided in any one of the first aspect or the optional manners of the first aspect, or to perform the method provided in any one of the second aspect or the optional manners of the second aspect, or at least one module is configured to perform the method provided in any one of the third aspect or the optional manners of the third aspect.

According to a sixth aspect, an Ethernet device is provided, including a main control board and an interface board. The main control board or the interface board is configured to implement the method provided in any one of the first aspect or the optional manners of the first aspect; or the main control board or the interface board is configured to implement the method provided in any one of the second aspect or the optional manners of the second aspect; or at least one module is configured to perform the method provided in any one of the third aspect or the optional manners of the third aspect.

According to a seventh aspect, a communication system is provided, where the communication system includes an Ethernet device. The Ethernet device is configured to: perform the method provided in any one of the first aspect or the optional manners of the first aspect, or perform the method provided in any one of the second aspect or the optional manners of the second aspect, or perform the method provided in any one of the third aspect or the optional manners of the third aspect.

According to an eighth aspect, a computer-readable storage medium is provided. The computer-readable storage medium stores a computer program, and when the computer program is executed, the method provided in any one of the first aspect or the optional manners of the first aspect is implemented, the method provided in any one of the second aspect or the optional manners of the second aspect is implemented, or the method provided in any one of the third aspect or the optional manners of the third aspect is implemented.

According to a ninth aspect, a computer program product is provided. The computer program product includes a program or code. When the program or the code is executed, the method provided in any one of the first aspect or the optional manners of the first aspect is implemented, the method provided in any one of the second aspect or the optional manners of the second aspect is implemented, or the method provided in any one of the third aspect or the optional manners of the third aspect is implemented.

According to a tenth aspect, a chip is provided. When the chip runs, the method provided in any one of the first aspect or the optional manners of the first aspect is implemented, the method provided in any one of the second aspect or the optional manners of the second aspect is implemented, or the method provided in any one of the third aspect or the optional manners of the third aspect is implemented. The chip may be a control chip or a forwarding chip, and the chip includes a programmable logic circuit and/or program instructions.

For technical effects of the second aspect to the tenth aspect, refer to technical effects of the first aspect. Details are not described herein again.

### BRIEF DESCRIPTION OF DRAWINGS

To describe technical solutions of this application more clearly, the following briefly describes the accompanying drawings used in embodiments. It is clear that the accompanying drawings in the following are merely accompanying drawings of some embodiments of this application, and a person of ordinary skill in the art may still derive other technical solutions and accompanying drawings from these accompanying drawings of this application without creative efforts.
FIG. 1(a) is a diagram of a random error according to an embodiment of the present invention;
FIG. 1(b) is a diagram of a random error according to an embodiment of the present invention;
FIG. 2 is a diagram of an interleaver processing process according to an embodiment of the present invention;
FIG. 3 is a schematic flowchart of a data sending method according to an embodiment of the present invention;
FIG. 4(a) is a diagram of an implementation of a physical layer of an Ethernet device according to an embodiment of the present invention;
FIG. 4(b) is a diagram of an implementation of a physical layer of an Ethernet device according to an embodiment of the present invention;
FIG. 4(c) is a diagram of an implementation of a physical layer of an Ethernet device according to an embodiment of the present invention;
FIG. 5 is a diagram of a data processing process of interleaving according to an embodiment of the present invention;
FIG. 6 is a diagram of a data processing process of interleaving according to an embodiment of the present invention;
FIG. 7(a) is a diagram of a data processing process of multiplexing according to an embodiment of the present invention;
FIG. 7(b) is a diagram of a data processing process of multiplexing according to an embodiment of the present invention;
FIG. 7(c) is a diagram of a data processing process of multiplexing according to an embodiment of the present invention;
FIG. 8(a) is a schematic flowchart of a data receiving method according to an embodiment of the present invention;
FIG. 8(b) is a schematic flowchart of a data receiving method according to an embodiment of the present invention;
FIG. 9(a) is a schematic flowchart of a method for sending and receiving data by a PMA sublayer according to an embodiment of the present invention;
FIG. 9(b) is a schematic flowchart of a method for sending and receiving data by a PMA sublayer according to an embodiment of the present invention;
FIG. 9(c) is a schematic flowchart of a method for sending and receiving data by a PMA sublayer according to an embodiment of the present invention;
FIG. 9(d) is a schematic flowchart of a method for sending and receiving data by a PMA sublayer according to an embodiment of the present invention;
FIG. 10 is a diagram of a structure of an Ethernet device according to an embodiment of the present invention;
FIG. 11 is a diagram of a structure of an Ethernet device according to an embodiment of the present invention;
FIG. 12 is a diagram of a structure of an Ethernet device according to an embodiment of the present invention; and
FIG. 13 is a diagram of a communication system according to an embodiment of the present invention.

### DESCRIPTION OF EMBODIMENTS

In a communication transmission process, due to various reasons such as environmental interference and a system error, data received by a data receiver may be inconsistent with data sent by a data transmitter, where such inconsistency is also referred to as a bit error. It can be learned that the bit error is inevitable in the communication transmission process. The bit error may cause many problems. For example, a bit error existing in a key control signal exchanged between various devices in a network may cause a system crash, a data loss, or other serious problems. In addition, the existence of the bit error greatly affects a network communication delay, and further affects experience of consumers in video watching, online games, calls, and other activities. Therefore, a bit error rate BER is always an important performance indicator of a communication system. A smaller BER value at the data receiver indicates higher network transmission reliability.

To ensure high reliability of the communication system, a specific requirement is usually raised for the BER of the communication system in the industry. For example, the institute of electrical and electronics engineers (Institute of Electrical and Electronics Engineers, IEEE) standard 802.3bs requires that a BER of data received by a data receiver for entering a media access control (media access control, MAC) sublayer should be lower than 1×10⁻¹³. However, when data in a network enters the data receiver after transmission over a network link is completed, a BER of the data may usually reach 2.4×10⁻⁴. In this case, the data receiver may correct a bit error in a data stream through FEC, to restore the data stream to to-be-sent data. Most bit errors can be eliminated through the FEC, so that a BER of processed data is greatly reduced.

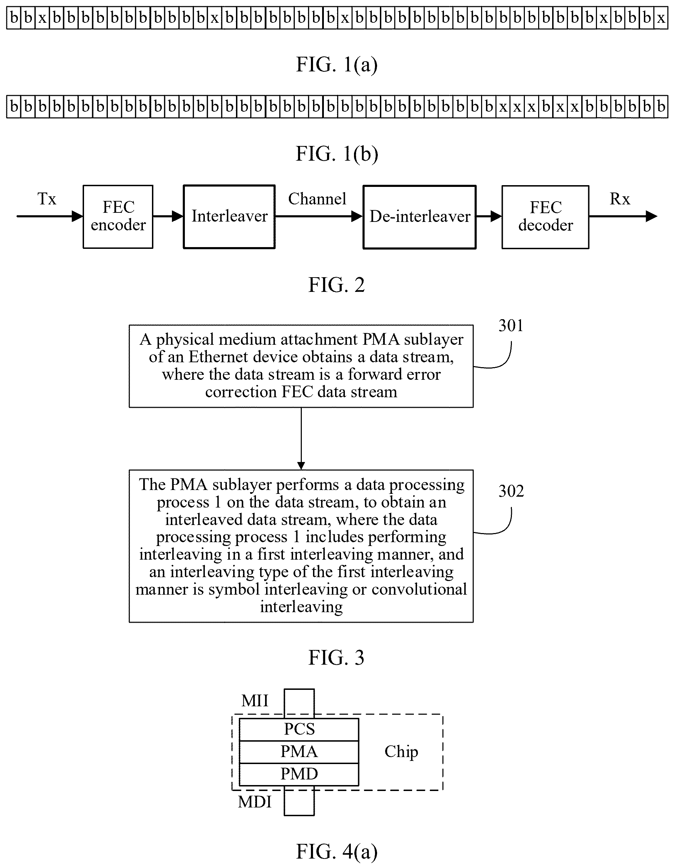

An FEC effect is related to bit error distribution. When two data streams have different bit error distribution, post-BERs of the two data streams are different even if pre-BERs of the two data streams are the same. The pre-BER is a BER before the FEC, and the post-BER is a BER after the FEC. There are mainly two types of bit error distribution: a random error (random error) and a non-random error (non-random error). For visual illustration, FIG. 1(a) and FIG. 1(b) show examples of random errors and non-random errors, where b represents a bit in which data is correct, and x represents a bit in which a bit error occurs. The random errors are embodied as that bit errors are randomly distributed, as shown in FIG. 1(a). The non-random errors are embodied as that a plurality of bit errors occur in short data sequences centrally, as shown in FIG. 1(b). Therefore, the non-random errors may also be referred to as burst errors (burst errors). The burst errors are common in actual communication networks, for example, continuous bit errors caused by decision feedback equalization (Decision Feedback Equalization, DFE) and continuous bit errors caused by fast fading due to multipath effects of radio information. As shown above, current BERs of data in FIG. 1(a) and FIG. 1(b) are the same, but different bit error distribution causes the data to have different BERs after experiencing FEC. In most communication transmission conditions, based on same pre-FEC, a post-BER of the burst error is higher than that of the random error.

For the burst error, to further reduce post-FEC, an interleaver is usually introduced. Use of the interleaver is shown in FIG. 2. In FIG. 2, Tx represents data to be input to an FEC encoder at a data transmitter. The data is encoded by the FEC encoder at the data transmitter and then input to the interleaver for interleaving. Data output by the interleaver is transmitted to a data receiver through a communication channel. The data is input to a de-interleaver at the data receiver for de-interleaving, and then de-interleaved data enters an FEC decoder for decoding. Rx represents data output by the FEC decoder at the data receiver, and through FEC and interleaving, a BER of Rx is greatly reduced. The interleaver may be disposed in a PCS of an Ethernet device, for example, a PCS in an Ethernet PHY chip. That is, the PCS interleaves the data.

As described above, with development of internet technologies, an Ethernet data transmission rate continuously increases, and consequently, the BER at the data receiver further increases. In this case, the interleaving performed by the PCS usually cannot meet a requirement for reducing the BER. In this case, if a circuit of the PCS is redesigned, it means that the Ethernet PHY chip is redesigned. This causes high costs.

This application provides a data sending method. The method is performed by an Ethernet device on a data sending side. In the method, functions of a PMA sublayer of the Ethernet device are extended, and the PMA sublayer interleaves data. Specifically, the PMA sublayer obtains a FEC encoded data stream, and performs a data processing process 1 on the data stream to obtain an interleaved data stream. The data processing process 1 includes performing interleaving in a first interleaving manner, where an interleaving type of the first interleaving manner is specifically symbol interleaving or convolutional interleaving. According to the method, the PMA sublayer performs symbol interleaving or convolutional interleaving on the data stream, and a specific manner of performing interleaving by the PMA sublayer may be flexibly designed, to ensure that an actual requirement for reducing a BER in a network is met. In addition, because extension of the PMA sublayer is relatively simple, an existing PCS does not need to be modified in a design of the PMA sublayer, and even when the PMA sublayer is located in a pluggable module, a master chip of an existing Ethernet physical PHY layer does not need to be modified in the design of the PMA sublayer, so that a requirement for reducing a BER in a high-rate data transmission scenario is met while research and development costs are reduced as much as possible.

FIG. 3 is a schematic flowchart of a data transmission method 300 according to an embodiment of this application. For example, the method may include the following steps.

Step 301: A physical medium attachment PMA sublayer of an Ethernet device obtains a data stream, where the data stream is a forward error correction FEC encoded data stream.

The Ethernet device may be an Ethernet chip, an Ethernet forwarding device such as a switch or a router, and a pluggable optical module or electrical module in Ethernet. In this case, the Ethernet device is an Ethernet device on a data sending side. It is easy to understand that, at some moments, the Ethernet device may alternatively act as an Ethernet device on a data receiving side, to perform a method on the data receiving side.

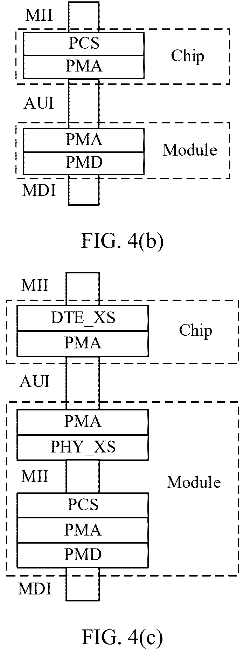

In this embodiment of this application, an Ethernet physical layer may be further divided into a plurality of sublayers based on main functions. These sublayers include but are not limited to: a PCS, a PMA sublayer, a physical medium dependent (physical medium dependent, PMD) sublayer, and the like. A specific implementation of these sublayers may be an electronic circuit. The PCS is responsible for performing encoding, scrambling, and other processing on data, and the FEC encoding is also performed at the PCS. There may be three implementations of the Ethernet physical layer in this embodiment of this application. As shown in FIG. 4(a) in a first manner, the Ethernet physical layer includes a PCS, a PMA sublayer, and a PMD sublayer, and the three sublayers are all included in a PHY chip. This manner is applicable to copper cable transmission, backplane transmission, and co-packaged optics (co-packaged optics, CPO) transmission scenarios. As shown in FIG. 4(b) in a second manner, the Ethernet physical layer includes a PCS, PMA sublayers, and a PMD sublayer, the PCS and one PMA sublayer are included in a PHY chip, and the other PMA sublayer and the PMD sublayer are included in a pluggable optical module or a pluggable electrical module. The pluggable optical module or the pluggable electrical module is independent of the PHY chip in circuit implementation, and is connected to the PHY chip through an interface. An interface type shown in FIG. 4(b) is an AUI. It may be understood that the interface type may further include another type, for example, a CEI. This manner is usually applicable to an optical fiber transmission or electrical transmission scenario, and is also applicable to a scenario of use of a concatenated code. As shown in FIG. 4(c) in a third manner, the Ethernet physical layer includes a PCS, PMA sublayers, a PMD sublayer, a DTE_XS, and a physical layer device extender sublayer (physical layer device extender sublayer, PHY_XS), the DTE_XS and the 1^{st} PMA sublayer are included in a PHY chip; and the 2^{nd} PMA sublayer, the PHY_XS, the PCS, the 3^{rd} PMA sublayer, and the PMD sublayer are included in a pluggable optical module or a pluggable electrical module. The pluggable optical module or the pluggable electrical module is also independent of the PHY chip in circuit implementation, and is connected to the PHY chip through an interface. An interface type shown in FIG. 4(c) is an AUI. It may be understood that the interface type may further include another type, for example, a CEI.

In this embodiment of this application, the PMA sublayer that performs interleaving in a first interleaving manner may be the PMA sublayer in FIG. 4(a), the PMA sublayer located in the pluggable optical module or the pluggable electrical module in FIG. 4(b), the PMA sublayer located in the PHY chip in FIG. 4(c), or the 2^{nd} PMA sublayer located in the pluggable optical module or the pluggable electrical module in FIG. 4(c), namely, the PMA sublayer adjacent to the PCS and the PMD.

When the PMA sublayer that performs interleaving in the first interleaving manner is the PMA sublayer located in the pluggable optical module or the pluggable electrical module, to implement the method in this embodiment of this application, only the PMA sublayer in the pluggable module needs to be designed, and the PHY chip does not need to be modified, so that the existing PHY chip can be compatible. In addition, a same PHY chip may match a plurality of types of different pluggable optical modules or pluggable electrical modules, to implement extension of a plurality of different interleaving manners. When an Ethernet data transmission rate further increases in the future, error correction performance can be upgraded by directly replacing the pluggable module.

When the PMA sublayer that performs interleaving in the first interleaving manner is the PMA sublayer located in the PHY chip, to implement the method in this embodiment of this application, only the PMA sublayer in the chip needs to be redesigned, and the existing PCS can still be reused. As described above, functions of the PCS are complex, while functions of the PMA sublayer are simple, and the PMA sublayer is easier to be extended. Therefore, according to the method in this embodiment of this application, modifications to the PHY chip can be reduced as much as possible.

In an optional manner, the PMA sublayer that performs interleaving in the first interleaving manner obtains a data stream, which may mean that the PMA sublayer obtains the data stream from a previous sublayer in a transmission direction of the data stream. With reference to the foregoing three physical layer implementations, the previous sublayer may be the PCS, the PMA, or the DTE_XS. When the PMA sublayer is separated from the previous sublayer in the circuit implementation, the PMA sublayer obtains the data stream from the previous sublayer through an interface, where the interface may be the AUI, the CEI, or the like.

In an optional manner, a rate of the interface for obtaining the data stream by the PMA sublayer is at least one of the following: 200 Gbps, 400 Gbps, or another rate value. This is not limited herein.

In an optional manner, the data stream obtained by the PMA sublayer may be one data stream or a plurality of data streams.

In an optional manner, after obtaining the data stream, the PMA sublayer may first split the single data stream. For example, when the rate of the interface for receiving the data stream by the PMA sublayer is 400 Gbps, the PMA sublayer may first split the data stream into two groups of data streams, and then separately perform interleaving. This facilitates subsequent breakout processing in the pluggable module.

Step 302: The PMA sublayer performs a data processing process 1 on the data stream, to obtain an interleaved data stream, where the first data processing process 1 includes performing interleaving in the first interleaving manner.

As described above, the data stream obtained by the PMA sublayer may be one data stream or a plurality of data streams. Correspondingly, the interleaving performed in the first interleaving manner may be interleaving within the data stream, or may be interleaving between the data streams.

In this embodiment of this application, the interleaving manner may have a plurality of attributes. An interleaving type is an attribute of the interleaving manner, and the interleaving type of the first interleaving manner is symbol interleaving or convolutional interleaving. The symbol interleaving may also be referred to as block interleaving (block interleaving). The symbol interleaving and the convolutional interleaving achieve basically consistent error correction performance. However, in the case of achieving same error correction performance, the two manners may be different in delays and power consumption.

An interleaving depth is also an attribute of the interleaving manner. The interleaving depth indicates a quantity of FEC codewords participating in the interleaving. The quantity of FEC codewords participating in the interleaving affects error correction performance.

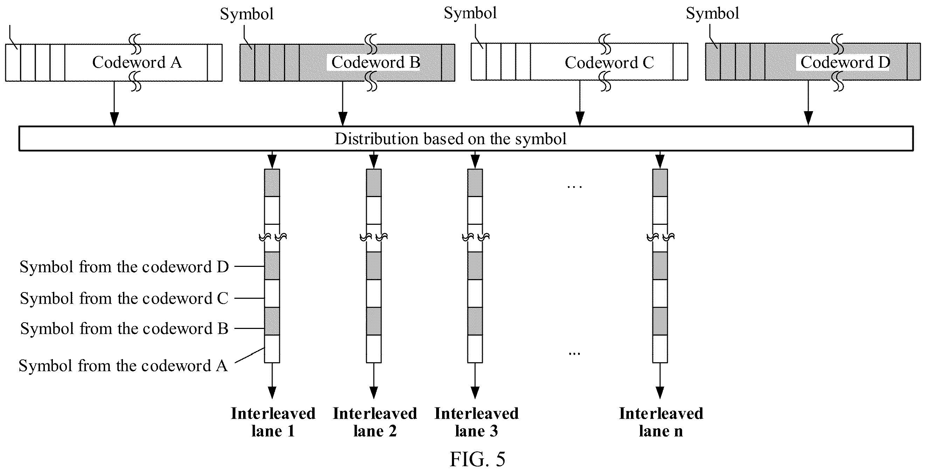

FIG. 5 is an example of a diagram of a data processing manner of symbol interleaving.

As shown in FIG. 5, a plurality of FEC-encoded codewords are obtained from a to-be-interleaved data stream as codewords participating in the interleaving, for example, a codeword A, a codeword B, a codeword C, and a codeword D in the figure. When the codewords participating in the interleaving are from a same data stream, interleaving is performed within the data stream. When the codewords participating in the interleaving are from different data streams, interleaving is performed between the data streams. Each codeword includes p FEC-encoded symbols (symbols), and each symbol includes q bits, that is, each codeword includes p×q bits. For example, a length of each symbol may be 10 bits, that is, symbol interleaving is performed at a granularity of 10 bits. As shown in the figure, four codewords are selected from a to-be-interleaved data stream to participate in the interleaving, that is, an interleaving depth is four codewords. When the codeword is an RS codeword, the interleaving depth may be referred to as 4×RS. The four codewords are alternately distributed to n data streams on n lanes at a granularity of a symbol for output, so that adjacent symbols in each data stream come from different codewords, that is, symbols from the four codewords appear alternately. In this case, an interleaved data sequence is formed, namely, an interleaved lane 1 to an interleaved lane n shown in the figure.

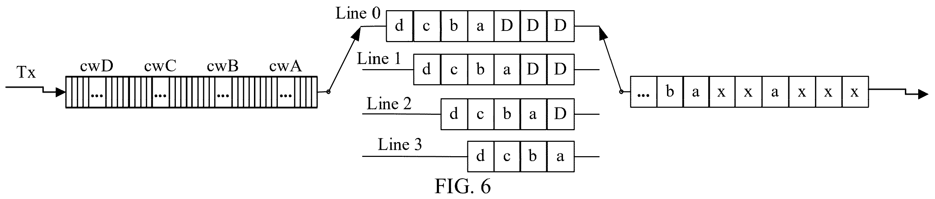

FIG. 6 is an example of a diagram of a data processing manner of convolutional interleaving. The convolutional interleaving is related to a plurality of design parameters, including a delay line number (delay line number), a delay block length (delay block length), a delay block number (delay block number), and the like. As shown in FIG. 6, a plurality of FEC-encoded codewords are obtained from a to-be-interleaved data stream to participate in the interleaving, and includes cwA, cwB, cwC, and cwD. An interleaving depth is four codewords, in other words, four codewords, namely, the foregoing cwA, cwB, cwC, and cwD, are selected from the to-be-interleaved data stream. The delay line number is 4, namely, four data lines 0, 1, 2, and 3 from top to bottom. In FIG. 6, D represents a delay block, each delay block is formed by a shift register (LFSR), and may temporarily store specific data, and a delay block number in each delay line is different. Each of input and output sides of an interleaver has a switchable connection switch for connecting a specific delay line. Data of the FEC codewords enters the convolutional interleaver by column at a granularity of the delay block length, for example, a, b, c, and d in FIG. 6. When a length of the FEC codeword is the same as the delay block length, a granularity at which data enters the convolutional interleaver is the length of the FEC codeword. When a length of the FEC codeword is different from the delay block length, and data of the FEC codeword is to enter the convolutional interleaver, the data needs to be adjusted to enter the convolutional interleaver at a granularity of the delay block length. Each time the input side inputs data with a delay block length, the output side also outputs data with the delay block length. Then, the switchable connection switches on both sides switch to a next delay line, and a round-robin is performed in a sequence of {line 0, line 1, line 2, line 3, line 0, line 1, line 2, line 3, line 0, line 1, ...}. In addition, x on the output side in FIG. 6 represents data that is before the four codewords and that is stored in a delay block. In addition, although the convolutional interleaving of one data stream is used as an example in FIG. 6, a process of convolutional interleaving between a plurality of data streams is similar to that shown in FIG. 6, and a difference lies in that codewords participating in the interleaving are from the plurality of data streams. Details are not described herein.

In this embodiment of this application, the first interleaving manner performed by the PMA sublayer may be implemented through the foregoing symbol interleaving or convolutional interleaving. Optionally, in a process in which the PMA sublayer performs interleaving, availability of an alignment marker (alignment marker, AM) needs to be reserved, so that data synchronization can still be performed on the data receiving side based on the AM.

In an optional manner, the data stream obtained by the PMA sublayer from the previous sublayer may be a data stream on which the interleaving has been performed, that is, another sublayer previous to the PMA sublayer may have performed interleaving on the data stream. Specifically, the data stream obtained by the PMA sublayer is a data stream obtained by performing a data processing process 2, and the data processing process 2 includes performing interleaving in a second interleaving manner. The data processing process 2 may be performed by the another sublayer previous to the PMA sublayer. As described above, the sublayer that performs the data processing process 2 and the PMA sublayer may be directly adjacent to each other, or may not be directly adjacent to each other, that is, the sublayers are separated by another sublayer. Optionally, the PCS or the DTE_XS may perform the second interleaving manner. The second interleaving manner may alternatively be implemented through the foregoing symbol interleaving or convolutional interleaving. That is, there is no conflict between the interleaving performed by the PMA sublayer and the interleaving performed by the another sublayer previous to the PMA sublayer. Especially, when the PMA sublayer is located in a pluggable optical module or a pluggable electrical module, the PCS or the DTE_XS in the PHY chip does not need to be modified, so that the existing PHY chip can be compatible, and only the PMA sublayer in the pluggable module needs to be designed to meet a requirement for reducing a BER in a network. When the PMA sublayer is located in the PHY chip, the existing PCS or DTE_XS can also be reused, and only the PMA sublayer in the chip needs to be redesigned and is relatively simply extended, to meet a requirement for reducing a BER in a network.

In an optional manner, the first interleaving manner may be different from the second interleaving manner. To be specific, an interleave change (interleave change) is performed through the interleaving performed by the PMA sublayer. To some extent, it may be considered that the interleaving performed by the PMA sublayer covers the interleaving performed by the another sublayer that is previous. Through this interleave change, a new error correction design can be flexibly implemented at the PMA sublayer, thereby better meeting a requirement for reducing a BER arising from an increasing Ethernet data transmission rate, without modifying the another sublayer that is previous, or even without modifying a master chip of an entire Ethernet PHY layer.

In an optional manner, the interleave change is specifically that an interleaving depth of the first interleaving manner is different from that of the second interleaving manner. An example in which the PCS performs 2×RS interleaving is used. A depth at which the PMA sublayer performs interleaving may be 4×RS. That is, the PMA sublayer implements deeper interleaving, and an error correction requirement in a scenario in which a speed of a single physical lane reaches 200 Gbps can be met.

In an optional manner, an interleaving type of the first interleaving manner may be the same as or different from that of the second interleaving manner. For example, both the PMA sublayer and the PCS perform symbol interleaving at a granularity of 10 bits. For another example, the PCS sublayer performs symbol interleaving, and the PMA sublayer performs convolutional interleaving.

In an optional manner, before performing interleaving in the first interleaving manner, the PMA sublayer may perform de-interleaving for the second interleaving manner, or may not perform de-interleaving for the second interleaving manner. That is, the PMA sublayer may first perform de-interleaving for the interleaving performed by the another sublayer that is previous to the PMA sublayer, and interleaving within the PMA sublayer is then performed. Alternatively, the PMA sublayer may not perform de-interleaving for the interleaving performed by the another sublayer that is previous to the PMA sublayer, and interleaving within the PMA sublayer is directly performed. An example in which the PCS performs 2×RS interleaving is used. The PMA sublayer makes first obtained data of two codewords wait, and then starts to perform interleaving on the waiting data of the two codewords and data of two codewords that subsequently reach. A total quantity of codewords participating in the interleaving is 4, that is, an interleaving depth is 4×RS.

In an optional manner, the data processing process 1 performed by the PMA sublayer on the data stream further includes bit multiplexing or symbol-group multiplexing. As described above, after data processing, the PMA sublayer outputs data to a next sublayer, for example, the PMD sublayer. Therefore, it needs to be ensured at the PMA sublayer that the output data adapts to a quantity of lanes connected to the next sublayer. Specifically, through the bit multiplexing or the symbol-group multiplexing, to-be-output data may be processed to adapt to a quantity of lanes connected to a next sublayer. The bit multiplexing or the symbol-group multiplexing may be included in the data processing process corresponding to the first interleaving manner. To be specific, in the process of performing interleaving by the PMA sublayer, the bit multiplexing or the symbol-group multiplexing is also performed on the data in consideration of the quantity of lanes connected to the next sublayer. The bit multiplexing or the symbol-group multiplexing may alternatively be performed after the data processing process corresponding to the first interleaving manner. That is, the PMA sublayer first performs the interleaving process, and then performs bit multiplexing or symbol-group multiplexing on the data, so that a data stream adapts to the quantity of lanes connected to the next sublayer.

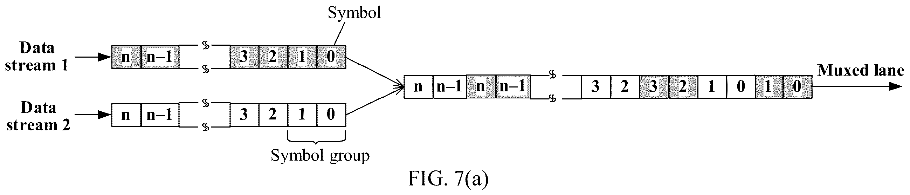

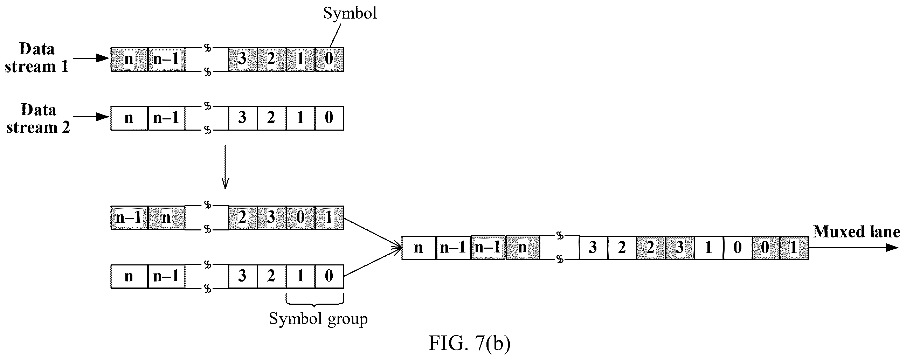

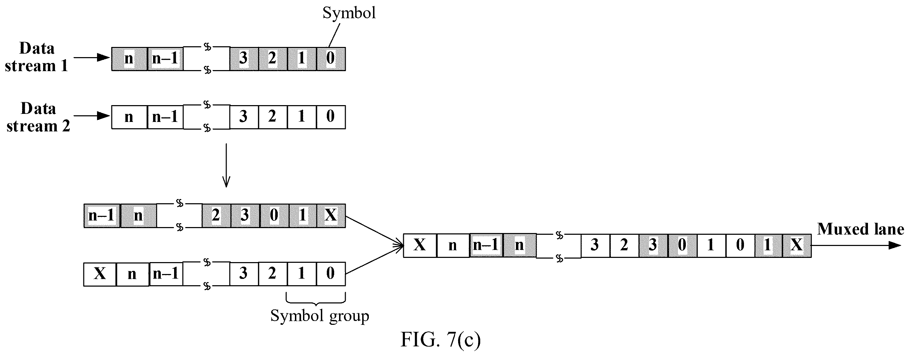

FIG. 7(a) to FIG. 7(c) are diagrams of examples of a data processing manner of symbol-group multiplexing. For example, there are two initial data streams participating in the multiplexing: a data stream 1 and a data stream 2. A quantity of initial data streams participating in the multiplexing may be any value. This is not limited herein. In the symbol-group multiplexing, each data stream is divided at a granularity of a symbol, a length of the symbol may be, for example, 20 bits or 40 bits, and at least two symbols of each data stream may form a symbol group (symbol group). Then, data from the two data streams is alternately multiplexed to a lane at a granularity of the symbol group in a round-robin fashion, where the lane is, for example, a muxed lane in FIG. 7(a). The muxed lane corresponds to a lane of an interface between sublayers. It is easy to understand that when an interface between two sublayers includes four lanes, and multiplexing is performed in the manner shown in FIG. 7(a), eight data streams are multiplexed to four muxed lanes. In this embodiment of this application, in the symbol-group multiplexing performed by the PMA sublayer, a quantity of input data streams and a quantity of multiplexed lanes may be determined based on an actual situation. This is not limited herein. In addition, in the symbol-group multiplexing, when the data from the two data streams is alternately multiplexed to the one lane at the granularity of the symbol group in the round-robin fashion, an exchange between positions of data of one of the data streams may be further included. For example, positions of two symbols are exchanged, as shown in FIG. 7(b); or a position of data of one of the data streams is delayed by one symbol to form a mismatch or another operation, as shown in FIG. 7(c), where x is a previous symbol or a later symbol that appears due to the delay. In bit multiplexing, a data stream participating in the multiplexing is divided at a granularity of one bit. Other operations are similar to those in the symbol-group multiplexing. Details are not described herein again.

In an optional manner, before the PMA sublayer performs convolutional interleaving, a step of performing bit multiplexing or symbol-group multiplexing on data streams may alternatively be added, to adjust a quantity of data streams during the convolutional interleaving. For a specific operation, refer to FIG. 7(a) to FIG. 7(c). Details are not described herein again.

In an optional manner, the data processing process 1 performed by the PMA sublayer on the data stream may further include one or more of other processing, for example, bit demultiplexing (bit demux) or symbol-group demultiplexing (symbol-group demux) and AM lock and deskew (deskew). As described above, the data stream obtained by the PMA sublayer is from the previous sublayer, and the previous sublayer may be, for example, the PCS, the DTE_XS, or another PMA sublayer. The PMA sublayer and the previous sublayer may be separated or not separated on a circuit. When being separated on the circuit, the PMA sublayer and the previous sublayer may be connected through an interface. An interface type includes but is not limited to an AUI, a CEI, or the like. Before data streams are sent from the previous sublayer to the PMA sublayer, the bit multiplexing or the symbol-group multiplexing may be performed on the data streams, to adapt to a quantity of lanes between the sublayers. In addition, when the data streams are transmitted through the interface, data of the data streams may also be out of lock or skew. Therefore, the PMA sublayer needs to restore the received data streams. For example, in the implementations of the Ethernet physical layer shown in FIG. 4(b), the PMA sublayer located in the pluggable module receives a data stream through the AUI, the PMA sublayer in the PHY chip performs bit multiplexing or symbol-group multiplexing on the data stream, and the PMA sublayer in the pluggable module first needs to perform corresponding bit demultiplexing or symbol-group demultiplexing, and performs AM lock and deskew on data that is out of lock or skew and that is transmitted through the AUI interface, to restore a data stream sent by the previous sublayer to a lane. For example, when the previous sublayer is the PCS layer, a PCS lane data stream is restored. Optionally, processing of the bit demultiplexing or the symbol-group demultiplexing and the alignment marker lock and deskew may be performed before the foregoing processing of performing interleaving in the first interleaving manner. That is, the PMA sublayer first restores the data stream from the previous sublayer, and then performs subsequent interleaving. Optionally, a granularity of the bit demultiplexing is 1 bit, and a granularity of the symbol-group demultiplexing may be 20 bits or 40 bits. Optionally, in the foregoing deskew processing, the data may be aligned to an AM, or the data may be aligned to a symbol boundary. For example, the data is aligned to a boundary of a symbol at a granularity of 10 bits, the data is aligned to a boundary of a symbol at a granularity of 20 bits, or the data is aligned to a boundary of a symbol at a granularity of 40 bits.

In an optional manner, the PMA sublayer may further perform FEC encoding again, to improve data error correction performance.

In an optional manner, a rate of a single physical lane of the data stream obtained by performing interleaving by the PMA sublayer is 200 Gbps. It is easy to understand that the 200 Gbps is a value that may float within a common range in the art, instead of an accurate value of a lane rate at any moment.

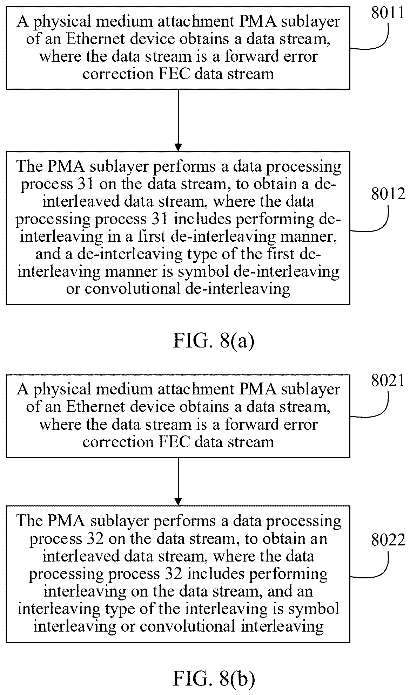

The foregoing describes the method performed by the Ethernet device on the data sending side. The Ethernet device on the data receiving side needs to perform a method that cooperates with that on the data sending side. FIG. 8(a) shows a data receiving method. After a PMA sublayer of an Ethernet device on a data sending side performs interleaving, a PMA sublayer of an Ethernet device on a data receiving side needs to perform a de-interleaving process accordingly. The method is performed by the Ethernet device. The Ethernet device may be an Ethernet chip, an Ethernet forwarding device such as a switch or a router, and a pluggable optical module or electrical module in Ethernet. The PMA sublayer of the Ethernet device on the data receiving side obtains a data stream, and performs a data processing process 31 on the data stream to obtain a de-interleaved data stream, where the data processing process 31 includes performing de-interleaving in a first de-interleaving manner, and a de-interleaving type of the first de-interleaving manner is specifically symbol de-interleaving or convolutional de-interleaving. In this method, because extension of the PMA sublayer is relatively simple, an existing PCS does not need to be modified in a design of the PMA sublayer, and even when the PMA sublayer is located in a pluggable module, a master chip of an existing Ethernet physical PHY layer does not need to be modified in the design of the PMA sublayer, so that a requirement for reducing a BER in a high-rate data transmission scenario is met while research and development costs are reduced as much as possible.

FIG. 8(a) is a schematic flowchart of a data transmission method according to an embodiment of this application. For example, the method may include the following steps.

Step 8011: A PMA sublayer of an Ethernet device obtains a data stream, where the data stream is a forward error correction FEC encoded data stream.

The Ethernet device may be an Ethernet chip, an Ethernet forwarding device such as a switch or a router, and a pluggable optical module or electrical module in Ethernet. In this case, the Ethernet device is an Ethernet device on a data receiving side. It is easy to understand that, at some moments, the Ethernet device may alternatively act as an Ethernet device on a data sending side, to perform a method on the data sending side.

For implementations of an Ethernet physical layer in the Ethernet device on the data receiving side, also refer to the implementations shown in FIG. 4(a), FIG. 4(b), and FIG. 4(c). Details are not described herein again.

In this embodiment of this application, the PMA sublayer that performs de-interleaving in a first de-interleaving manner may be the PMA sublayer in FIG. 4(a), the PMA sublayer located in the pluggable optical module or the pluggable electrical module in FIG. 4(b), the PMA sublayer located in the PHY chip in FIG. 4(c), or the 2^{nd} PMA sublayer located in the pluggable optical module or the pluggable electrical module in FIG. 4(c), namely, the PMA sublayer adjacent to the PCS and the PMD.

In an optional manner, the PMA sublayer obtains a data stream, which may mean that the PMA sublayer obtains the data stream from a previous sublayer in a transmission direction of the data stream. With reference to the foregoing three physical layer implementations, the previous sublayer may be the PMD. When the PMA sublayer is separated from the previous sublayer in circuit implementation, the PMA sublayer obtains the data stream from the previous sublayer through an interface, where the interface may be an AUI, a CEI, or the like.

In an optional manner, the data stream obtained by the PMA sublayer may be one data stream or a plurality of data streams.

Step 8012: The PMA sublayer performs a data processing process 31 on the data stream, to obtain a de-interleaved data stream, where the data processing process 31 includes performing de-interleaving in the first de-interleaving manner.

As described above, the data stream obtained by the PMA sublayer may be the one data stream or the plurality of data streams. Correspondingly, the interleaving performed in the first de-interleaving manner may be de-interleaving within the data stream, or may be de-interleaving between the data streams.

In this embodiment of this application, a de-interleaving type of the first de-interleaving manner is symbol de-interleaving or convolutional de-interleaving. Data processing processes of the symbol de-interleaving and the convolutional de-interleaving are de-interleaving processes respectively corresponding to data processing processes shown in FIG. 5 and FIG. 6. Details thereof are not described herein.

In an optional manner, corresponding to a first interleaving manner, the de-interleaving is performed in the first de-interleaving manner at a granularity of 10 bits, or the PMA sublayer performs 10-bit symbol de-interleaving.

In an optional manner, the data processing process 31 performed by the PMA sublayer on the receiving side also includes bit multiplexing or symbol-group multiplexing, so that a quantity of output data streams can adapt to a quantity of data lanes between the PMA sublayer and a next sublayer in the data transmission direction. A specific implementation thereof is similar to bit multiplexing or symbol-group multiplexing performed by a PMA sublayer on a sending side. Details are not described herein again. A granularity of the bit multiplexing is 1 bit, and a granularity of the symbol-group multiplexing may be 20 bits or 40 bits. Optionally, processing of the bit multiplexing or the symbol-group multiplexing may be performed after the foregoing processing of performing de-interleaving in a third interleaving manner, or the processing of the bit multiplexing or the symbol-group multiplexing may be included in the foregoing processing process of performing de-interleaving in the third interleaving manner.

In an optional manner, the data processing process 31 performed by the PMA sublayer on the data stream further includes bit demultiplexing or symbol-group demultiplexing. A granularity of the bit demultiplexing is 1 bit, and a granularity of the symbol-group demultiplexing may be 20 bits or 40 bits.

In an optional manner, the data processing process 31 performed by the PMA sublayer on the data stream further includes AM lock and deskew.

Through the bit demultiplexing or the symbol-group demultiplexing and the alignment marker lock and deskew, the data stream from the previous sublayer may be restored. For example, the previous sublayer is a PMD. Optionally, processing of the bit demultiplexing or the symbol-group demultiplexing and the alignment marker lock and deskew is performed before the processing of performing de-interleaving in the first de-interleaving manner. That is, through the processing of the bit demultiplexing or the symbol-group demultiplexing and the alignment marker lock and deskew, the data stream from the previous sublayer is restored, and the de-interleaving is performed.

In an optional manner, after performing de-interleaving in the data processing process 31 on the data stream, the PMA sublayer may further re-interleave the de-interleaved data stream in a second interleaving manner, to obtain a re-interleaved data stream. This is to cooperate with the processing of performing de-interleaving by the existing PCS or DTE_XS in the Ethernet device on the receiving side, so that the existing PCS or DTE_XS does not need to be improved, to adapt to an existing PHY chip as much as possible.

In an optional manner, a de-interleaving depth of the first de-interleaving manner is 4×RS.

In an optional manner, the PMA sublayer may further perform FEC decoding, to improve data error correction performance.

In addition, more implementation details of the Ethernet device on the receiving side may cooperate with that of the foregoing Ethernet device on the sending side. Details are not described herein.

FIG. 8(b) shows another data receiving method. The method is performed by an Ethernet device. The Ethernet device may be an Ethernet chip, an Ethernet forwarding device such as a switch or a router, and a pluggable optical module or electrical module in Ethernet. After a PMA sublayer of the Ethernet device on a data sending side performs interleaving, an interleaving manner of a data stream is changed, and a PMA sublayer of an Ethernet device on a data receiving side needs to perform an interleave change corresponding to the change, to change the interleaving manner of the data stream to an interleaving manner that adapts to a de-interleaving process performed by another sublayer, thereby avoiding modifications to a PHY chip. For example, when the Ethernet PHY chip performs 2×RS de-interleaving on the data stream, the PMA sublayer may change an interleaving manner for an obtained data stream to the 2×RS interleaving, so that the correct data stream can be obtained by performing 2×RS de-interleaving on the data stream by the PHY chip. The PMA sublayer of the Ethernet device on the data receiving side obtains a data stream, and performs a data processing process 32 on the data stream to obtain an interleaved data stream, where the data processing process 32 includes performing interleaving on the data stream, and an interleaving type of the interleaving is symbol interleaving or convolutional interleaving. In the method, the PMA sublayer of the Ethernet device on the data receiving side performs interleaving, to change the interleaving manner of the data stream to the interleaving manner that adapts to the de-interleaving process performed by the another sublayer. That is, the interleave change is implemented, and the modifications to the PHY chip can be avoided while error correction performance is improved, and a requirement for reducing a BER is reduced in a network.

FIG. 8(b) is a schematic flowchart of a data transmission method according to an embodiment of this application. For example, the method may include the following steps.

Step 8021: A PMA sublayer of an Ethernet device obtains a data stream, where the data stream is a forward error correction FEC encoded data stream.

The Ethernet device may be an Ethernet chip, an Ethernet forwarding device such as a switch or a router, and a pluggable optical module or electrical module in Ethernet. In this case, the Ethernet device is an Ethernet device on a data receiving side. It is easy to understand that, at some moments, the Ethernet device may alternatively be used as an Ethernet device on a data sending side, to perform a method on the data sending side.

For implementations of an Ethernet physical layer in the Ethernet device on the data receiving side, also refer to the implementations shown in FIG. 4(a), FIG. 4(b), and FIG. 4(c). Details are not described herein again.

In this embodiment of this application, the PMA sublayer that performs de-interleaving in a first de-interleaving manner may be the PMA sublayer in FIG. 4(a), the PMA sublayer located in the pluggable optical module or the pluggable electrical module in FIG. 4(b), the PMA sublayer located in the PHY chip in FIG. 4(c), or the 2^{nd} PMA sublayer located in the pluggable optical module or the pluggable electrical module in FIG. 4(c), namely, the PMA sublayer adjacent to the PCS and the PMD.

In an optional manner, the PMA sublayer obtains a data stream, which may mean that the PMA sublayer obtains the data stream from a previous sublayer in a transmission direction of the data stream. With reference to the foregoing three physical layer implementations, the previous sublayer may be the PMD. When the PMA sublayer is separated from the previous sublayer in circuit implementation, the PMA sublayer obtains the data stream from the previous sublayer through an interface, where the interface may be an AUI, a CEI, or the like.

In an optional manner, the data stream obtained by the PMA sublayer may be one data stream or a plurality of data streams.

Step 8012: The PMA sublayer performs a data processing process 32 on the data stream, to obtain an interleaved data stream, where the data processing process 32 includes performing interleaving on the data stream.

As described above, the data stream obtained by the PMA sublayer may be the one data stream or the plurality of data streams. Correspondingly, the interleaving may be interleaving within the data stream, or may be interleaving between the data streams.

In this embodiment of this application, an interleaving type of the interleaving is symbol interleaving or convolutional interleaving. For a data processing process of the symbol interleaving or the convolutional interleaving, refer to data processing processes shown in FIG. 5 and FIG. 6. Details thereof are not described herein again.

In an optional manner, the symbol interleaving is performed at a granularity of 10 bits.

In an optional manner, a PCS or a DTE_XS performs de-interleaving on the interleaved data stream.

In an optional manner, an interleaving depth of the interleaving is 2×RS. When the PCS or the DTE_XS in the Ethernet PHY chip performs 2×RS de-interleaving on the data stream, the PMA sublayer may change an interleaving manner for an obtained data stream to the 2×RS interleaving, so that the correct data stream can be obtained by performing 2×RS de-interleaving on the data stream by the PHY chip.

In an optional manner, the data processing process 32 includes performing de-interleaving in the first de-interleaving manner. A de-interleaving type of the first de-interleaving manner is specifically symbol de-interleaving or convolutional de-interleaving, to obtain a de-interleaved data stream. The first de-interleaving manner may be 4×RS de-interleaving. For more details about a process of performing de-interleaving in the first de-interleaving manner, refer to related descriptions in the data transmission method shown in FIG. 8(a). Details are not described herein again.

In an optional manner, the data processing process 32 includes bit demultiplexing or symbol-group demultiplexing. A granularity of the bit demultiplexing is 1 bit, and a granularity of the symbol-group demultiplexing may be 20 bits or 40 bits.

In an optional manner, the data processing process 32 includes alignment marker AM lock and deskew.

The data stream obtained by the PMA sublayer is from a previous sublayer in a data transmission direction, and the previous sublayer may be, for example, a PMD sublayer. Through the bit demultiplexing or the symbol-group demultiplexing and the alignment marker lock and deskew, the data stream from the previous sublayer may be restored. Optionally, processing in the first de-interleaving manner may be further implemented in the foregoing processing of the bit demultiplexing or the symbol-group demultiplexing and the alignment marker lock and deskew. That is, through the processing of the bit demultiplexing or the symbol-group demultiplexing and the alignment marker lock and deskew, the data stream from the previous sublayer is restored, and the de-interleaving is implemented.

In an optional manner, the data processing process 32 includes bit multiplexing or symbol-group multiplexing. A granularity of the bit multiplexing is 1 bit, and a granularity of the symbol-group multiplexing may be 20 bits or 40 bits. Through the bit multiplexing or the symbol-group multiplexing, a quantity of data streams output by the PMA sublayer can adapt to a quantity of data lanes between the PMA and a next sublayer in a data transmission direction. Optionally, processing of the bit multiplexing or the symbol-group multiplexing may be performed after the foregoing processing of performing de-interleaving in a third interleaving manner, or the processing of the bit multiplexing or the symbol-group multiplexing may be included in the foregoing processing process of performing de-interleaving in the third interleaving manner.

In an optional manner, the PMA sublayer may further perform FEC decoding, to improve data error correction performance.

In addition, more implementation details of the Ethernet device on the receiving side may cooperate with that of the foregoing Ethernet device on the sending side. Details are not described herein.

In addition, in the method shown in FIG. 8(a) or FIG. 8(b), in the Ethernet device on the receiving side, after the interleave change in the PMA sublayer, the data stream may be directly AUI lane data or PCS lane data.

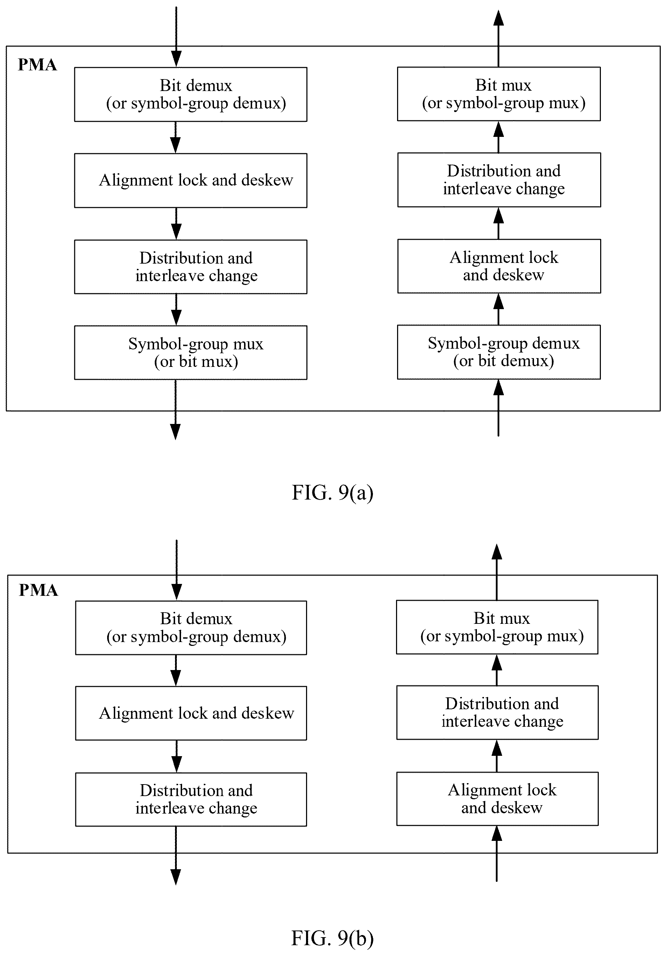

Main steps performed by the PMA sublayers on the receiving side and the sending side in this embodiment of this application may be described by using examples in FIG. 9(a) to FIG. 9(d).

When the method is applicable to the implementations of the physical layer shown in FIG. 4(b), the PMA sublayer is located in the pluggable optical module or the pluggable electrical module, and is connected to the previous sublayer through the interface. The main steps performed by the PMA sublayer on the data sending side are shown on a left side in FIG. 9(a), and the main steps performed by the PMA sublayer on the data receiving side are shown on a right side in FIG. 9(a), where arrows in the figure indicate data transmission directions.

On the data sending side, the PMA restores PCS lane data by performing first two steps: bit demultiplexing or symbol-group demultiplexing and AM lock and deskew. In a subsequent interleaving step, namely, distribution and interleave, new symbol interleaving or convolutional interleaving is performed on the PCS lane data. The interleaving step may be implemented in different methods: De-interleaving may be first performed on interleaving performed by the PCS to restore complete RS codewords, the symbol interleaving or the convolutional interleaving is then performed after all four codewords are received, and lanes of a needed quantity are obtained through distribution. Alternatively, de-interleaving may not be performed, that is, complete RS codewords are not restored, and the PCS lane data is directly arranged in a specific sequence to obtain lanes of a quantity needed for output. For the interleaving step, refer to related descriptions of the methods shown in FIG. 5 and FIG. 6. Details are not described herein again. In addition, a step of symbol-group multiplexing or bit multiplexing is further included in FIG. 9(a), and is used to synthesize data into data lanes of a quantity needed by a next sublayer. For other details in FIG. 9(a), refer to related descriptions in the data sending method shown in FIG. 3. Details are not described herein again. In addition, each step on the data receiving side corresponds to that on the data sending side, and reference may be made to related description of the data receiving method shown in FIG. 8(a) or FIG. 8(b). Details are not described herein again.

When the method is applicable to the implementations of the physical layer shown in FIG. 4(b), the PMA sublayer is located in the pluggable optical module or the pluggable electrical module, and is connected to the previous sublayer through the interface. The main steps performed by the PMA sublayer on the data sending side may alternatively be shown on a left side in FIG. 9(b), and the main steps performed by the PMA sublayer on the data receiving side may alternatively be shown on a right side in FIG. 9(b), where arrows in the figure indicate data transmission directions. In comparison with FIG. 9(a), a main difference in steps shown in FIG. 9(b) is that a process of symbol-group multiplexing or bit multiplexing is included in an interleaving step, and a quantity of lanes obtained through distribution after interleaving is equal to a quantity of lanes needed by a next sublayer. A quantity of lanes may be a quantity of physical lanes, or may be equal to a quantity of PCS lanes. Therefore, no separate mux step is needed. Each step on the data receiving side corresponds to that on the data sending side. Details are not described herein again.

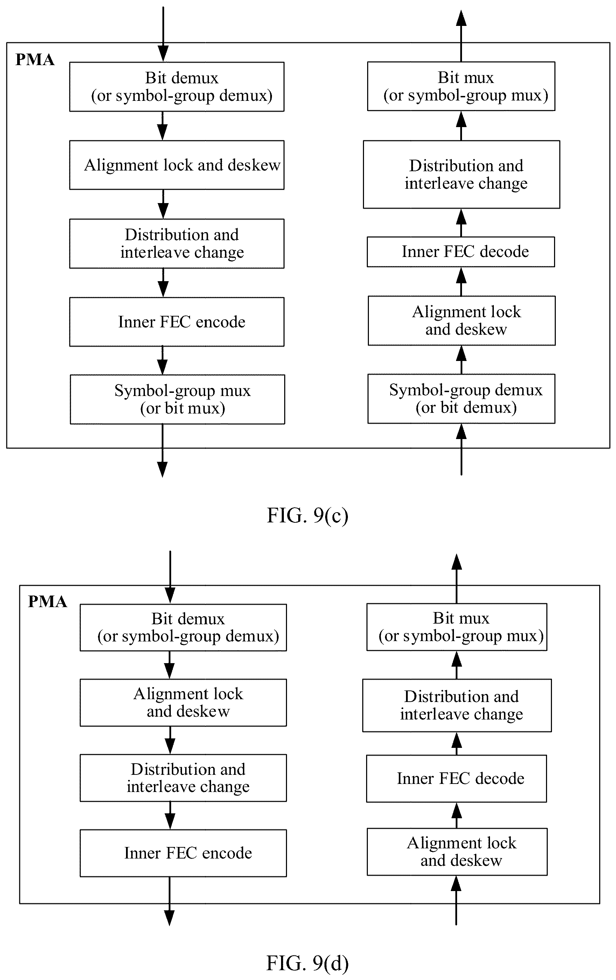

When the method is applicable to the implementations of the physical layer shown in FIG. 4(b), the PMA sublayer is located in the pluggable optical module or the pluggable electrical module, and is connected to the previous sublayer through the interface. The main steps performed by the PMA sublayer on the data sending side may alternatively be shown on a left side in FIG. 9(c), and the main steps performed by the PMA sublayer on the data receiving side may alternatively be shown on a right side in FIG. 9(c), where arrows in the figure indicate data transmission directions. In comparison with FIG. 9(a), a main difference in steps shown in FIG. 9(c) is that the PMA layer performs an FEC encoding step. Each step on the data receiving side corresponds to that on the data sending side. Details are not described herein again.

When the method is applicable to the implementations of the physical layer shown in FIG. 4(b), the PMA sublayer is located in the pluggable optical module or the pluggable electrical module, and is connected to the previous sublayer through the interface. The main steps performed by the PMA sublayer on the data sending side may alternatively be shown on a left side in FIG. 9(d), and the main steps performed by the PMA sublayer on the data receiving side may alternatively be shown on a right side in FIG. 9(d), where arrows in the figure indicate data transmission directions. In comparison with FIG. 9(b), a main difference in steps shown in FIG. 9(d) is that the PMA layer performs an FEC encoding step. Each step on the data receiving side corresponds to that on the data sending side. Details are not described herein again.

When the method is applicable to the implementations of the physical layer shown in FIG. 4(a) or FIG. 4(c), the PMA sublayer is not connected to the previous sublayer through the interface, and the PMA sublayer may directly obtain lane data. Therefore, in comparison with FIG. 9(a) to FIG. 9(d), when the method is applicable to the implementations of the physical layer shown in FIG. 4(a) or FIG. 4(c), the main steps performed by the PMA sublayer on the data receiving side do not include the two steps of the bit demultiplexing or the symbol-group demultiplexing and the AM lock and deskew, and similarly, the main steps performed by the PMA sublayer on the data sending side do not include the two steps: the bit demultiplexing or the symbol-group demultiplexing and the AM lock and deskew either. Other steps are similar to those in FIG. 9(a) to FIG. 9(d). Details are not described herein again.

The foregoing describes the data sending and data receiving methods in embodiments of this application. Corresponding to the foregoing methods, an embodiment of this application further provides Ethernet devices for sending data and receiving data.

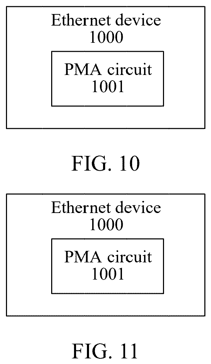

FIG. 10 is a diagram of a structure of an Ethernet device according to an embodiment of this application. The Ethernet device may be configured to: send data or receive data. The Ethernet device may be the Ethernet device in the data sending method shown in FIG. 3. Based on the structure shown in FIG. 9, the Ethernet device can perform all or some operations in the method shown in FIG. 3. It should be understood that the Ethernet device may include more additional structures than the shown structure, or a part of the shown structure is omitted. This is not limited in this embodiment of this application. As shown in FIG. 10, the Ethernet device includes:
a PMA circuit, configured to: obtain a data stream, where the data stream is a forward error correction FEC encoded data stream; and perform a first data processing process on the data stream, to obtain an interleaved data stream, where the first data processing process includes performing interleaving in a first interleaving manner, where an interleaving type of the first interleaving manner is symbol interleaving or convolutional interleaving.

In some possible implementations, the symbol interleaving is performed at a granularity of 10 bits.

In some possible implementations, the first data processing process further includes bit multiplexing or symbol-group multiplexing.

In some possible implementations, before the performing interleaving in the first interleaving manner, the first data processing process further includes bit demultiplexing or symbol-group demultiplexing.

In some possible implementations, before the performing interleaving in the first interleaving manner, the first data processing process further includes alignment marker AM lock and deskew.

In some possible implementations, the data stream is a data stream obtained by performing a second data processing process, and the second data processing process includes performing interleaving in a second interleaving manner.

In some possible implementations, an interleaving depth of the first interleaving manner is different from that of the second interleaving manner.

In some possible implementations, the interleaving depth of the second interleaving manner is 2×RS.

In some possible implementations, the first data processing process further includes performing de-interleaving for the second interleaving manner.

In some possible implementations, the second data processing process is performed by a physical coding sublayer PCS or a data terminal equipment extender sublayer DTE_XS.

In some possible implementations, the interleaving depth of the first interleaving manner is 4×RS.

In some possible implementations, a lane rate of the interleaved data stream is 200 gigabits per second Gbps.

In some possible implementations, a rate of an interface for receiving the data stream by the PMA circuit is at least one of the following: 200 Gbps or 400 Gbps.

In some possible implementations, the PMA circuit obtains the data stream from an attachment unit interface AUI or a common electrical interface CEI.

In some possible implementations, the PMA circuit sends the interleaved data stream to a physical medium dependent PMD sublayer.

For specific descriptions of operations performed by the Ethernet device, refer to specific descriptions of the method embodiment shown in FIG. 3. Details are not described herein again.

The Ethernet device may be an Ethernet chip, an Ethernet forwarding device such as a switch or a router, and a pluggable optical module or electrical module in Ethernet.

When the Ethernet device is the Ethernet chip, the Ethernet chip may be implemented by using the structure shown in FIG. 4(a). The PMA circuit in the Ethernet device corresponds to the PMA sublayer shown in FIG. 4(a). Optionally, the Ethernet device further includes the PCS and the PMD sublayer.

When the Ethernet device is the pluggable optical module or electrical module, the pluggable optical module or electrical module may be implemented by using the structure shown in FIG. 4(b) or FIG. 4(c). The PMA circuit in the Ethernet device corresponds to the PMA sublayer shown in FIG. 4(b) or the PMA sublayer adjacent to the PMD layer shown in FIG. 4(c). Optionally, the Ethernet device further includes the PMD sublayer.

When the Ethernet device is the Ethernet forwarding device such as the switch or the router, the Ethernet device may include an Ethernet chip, or a pluggable optical module or electrical module. The Ethernet chip, or the pluggable optical module or electrical module can perform all or some operations in the method in FIG. 3.

FIG. 10 is a diagram of a structure of an Ethernet device according to an embodiment of this application. The Ethernet device may be configured to: send data or receive data. The Ethernet device may be the Ethernet device in the data receiving method shown in FIG. 8(a). Based on the structure shown in FIG. 9, the Ethernet device can perform all or some operations in the method shown in FIG. 8(a). It should be understood that the Ethernet device may include more additional structures than the shown structure, or a part of the shown structure is omitted. This is not limited in this embodiment of this application. As shown in FIG. 10, the Ethernet device includes:
a PMA circuit, configured to: obtain a data stream, where the data stream is a forward error correction FEC encoded data stream; and perform a third data processing process on the data stream, to obtain a de-interleaved data stream, where the third data processing process includes performing de-interleaving in a first de-interleaving manner, where a de-interleaving type of the first de-interleaving manner is symbol de-interleaving or convolutional de-interleaving.

In some possible implementations, the symbol de-interleaving is performed at a granularity of 10 bits.

In some possible implementations, the third data processing process includes bit multiplexing or symbol-group multiplexing.

In some possible implementations, the third data processing process includes bit demultiplexing or symbol-group demultiplexing.

In some possible implementations, the third data processing process includes alignment marker AM lock and deskew.

In some possible implementations, after that the PMA circuit performs a third data processing process on the data stream, the method further includes: The PMA circuit performs interleaving on the de-interleaved data stream in a second interleaving manner, to obtain a re-interleaved data stream.

In some possible implementations, the re-interleaved data stream is de-interleaved by a physical coding sublayer PCS or a data terminal equipment extender sublayer DTE _XS.

In some possible implementations, an interleaving depth of the first de-interleaving manner is 4×RS.

In some possible implementations, that a PMA circuit obtains a data stream includes: The PMA circuit sends the interleaved data stream to a physical medium dependent PMD sublayer.

For specific descriptions of operations performed by the Ethernet device, refer to specific descriptions of the method embodiment shown in FIG. 8(a). Details are not described herein again.

The Ethernet device may be an Ethernet chip, an Ethernet forwarding device such as a switch or a router, and a pluggable optical module or electrical module in Ethernet.

When the Ethernet device is the Ethernet chip, the Ethernet chip may be implemented by using the structure shown in FIG. 4(a). The PMA circuit in the Ethernet device corresponds to the PMA sublayer shown in FIG. 4(a). Optionally, the Ethernet device further includes the PCS and the PMD sublayer.

When the Ethernet device is the pluggable optical module or electrical module, the pluggable optical module or electrical module may be implemented by using the structure shown in FIG. 4(b) or FIG. 4(c). The PMA circuit in the Ethernet device corresponds to the PMA sublayer shown in FIG. 4(b) or the PMA sublayer adjacent to the PMD layer shown in FIG. 4(c). Optionally, the Ethernet device further includes the PMD sublayer.

When the Ethernet device is the Ethernet forwarding device such as the switch or the router, the Ethernet device may include an Ethernet chip, or a pluggable optical module or electrical module. The Ethernet chip, or the pluggable optical module or electrical module can perform all or some operations in the method shown in FIG. 8(a).

FIG. 10 is a diagram of a structure of an Ethernet device according to an embodiment of this application. The Ethernet device may be configured to: send data or receive data. The Ethernet device may be the Ethernet device in the data receiving method shown in FIG. 8(b). Based on the structure shown in FIG. 9, the Ethernet device can perform all or some operations in the method shown in FIG. 8(b). It should be understood that the Ethernet device may include more additional structures than the shown structure, or a part of the shown structure is omitted. This is not limited in this embodiment of this application. As shown in FIG. 10, the Ethernet device includes:
a PMA circuit, configured to obtain a data stream, where the data stream is a forward error correction FEC encoded data stream. The PMA sublayer performs a third data processing process on the data stream, to obtain an interleaved data stream, where the third data processing process includes performing interleaving on the data stream, where an interleaving type of the interleaving is symbol interleaving or convolutional interleaving.

In some possible implementations, the symbol interleaving is performed at a granularity of 10 bits.

In some possible implementations, the interleaved data stream is de-interleaved by a physical coding sublayer PCS or a data terminal equipment extender sublayer DTE _XS.

In some possible implementations, an interleaving depth of the interleaving is 2×RS.

In some possible implementations, the third data processing process further includes bit demultiplexing or symbol-group demultiplexing.

In some possible implementations, the third data processing process further includes alignment marker AM lock and deskew.

In some possible implementations, the third data processing process further includes bit multiplexing or symbol-group multiplexing.

For specific descriptions of operations performed by the Ethernet device, refer to specific descriptions of the method embodiment shown in FIG. 8(b). Details are not described herein again.

The Ethernet device may be an Ethernet chip, an Ethernet forwarding device such as a switch or a router, and a pluggable optical module or electrical module in Ethernet.

When the Ethernet device is the Ethernet chip, the Ethernet chip may be implemented by using the structure shown in FIG. 4(a). The PMA circuit in the Ethernet device corresponds to the PMA sublayer shown in FIG. 4(a). Optionally, the Ethernet device further includes the PCS and the PMD sublayer.

When the Ethernet device is the pluggable optical module or electrical module, the pluggable optical module or electrical module may be implemented by using the structure shown in FIG. 4(b) or FIG. 4(c). The PMA circuit in the Ethernet device corresponds to the PMA sublayer shown in FIG. 4(b) or the PMA sublayer adjacent to the PMD layer shown in FIG. 4(c). Optionally, the Ethernet device further includes the PMD sublayer.

When the Ethernet device is the Ethernet forwarding device such as the switch or the router, the Ethernet device may include an Ethernet chip, or a pluggable optical module or electrical module. The Ethernet chip, or the pluggable optical module or electrical module can perform all or some operations in the method shown in FIG. 8(b).

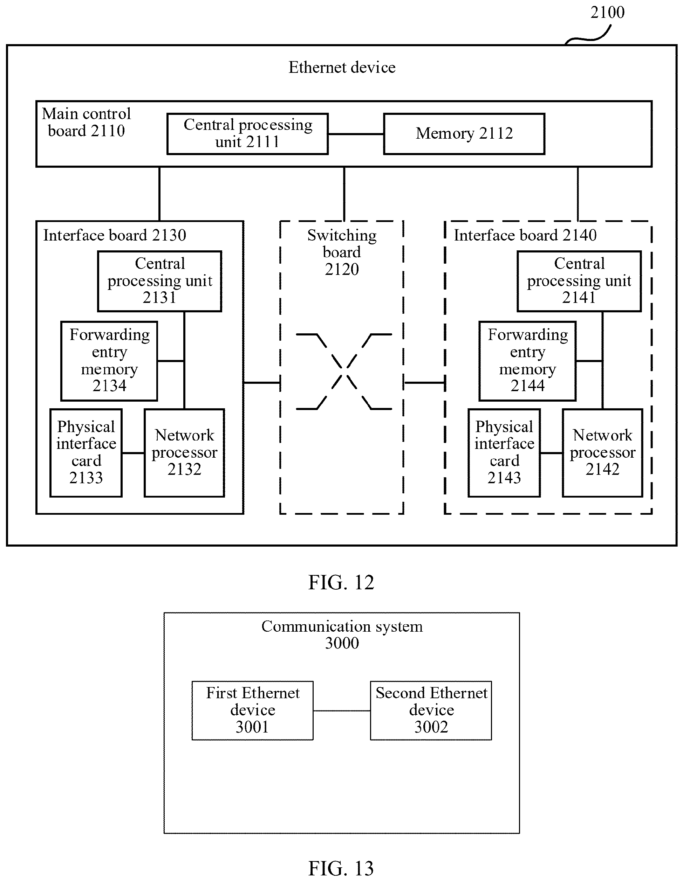

FIG. 12 is a diagram of a structure of an Ethernet device 2100 according to another example embodiment of this application. The Ethernet device 2100 shown in FIG. 12 is configured to perform all or some operations in the data sending method shown in FIG. 3 or the data receiving method shown in FIG. 8(a) or FIG. 8(b). The network device 2100 is, for example, an Ethernet forwarding device such as a switch or a router, and the Ethernet device 2100 may be implemented by using a general bus architecture.

As shown in FIG. 12, the Ethernet device 2100 includes a main control board 2110 and an interface board 2130.

The main control board is also referred to as a main processing unit (main processing unit, MPU) or a route processor card (route processor card). The main control board 2110 is configured to: control and manage components in the Ethernet device 2100, including functions of route calculation, device management, device maintenance, and protocol processing. The main control board 2110 includes a central processing unit 2111 and a memory 2112.

The interface board 2130 is also referred to as a line interface unit (line processing unit, LPU), a line card (line card), or a service board. The interface board 2130 is configured to: provide various service interfaces and implement data packet forwarding. The service interfaces include but are not limited to an Ethernet interface, a POS (Packet over SONET/SDH) interface, and the like. The Ethernet interface is, for example, a flexible Ethernet service interface (Flexible Ethernet Clients, FlexE Clients). The interface board 2130 includes a central processing unit 2131, a network processor 2132, a forwarding entry memory 2134, and a physical interface card (physical interface card, PIC) 2133.

The central processing unit 2131 on the interface board 2130 is configured to: control and manage the interface board 2130 and communicate with the central processing unit 2111 on the main control board 2110.

The network processor 2132 is configured to implement packet forwarding processing. A form of the network processor 2132 may be a forwarding chip. The forwarding chip may be a network processor (network processor, NP). In some embodiments, the forwarding chip may be implemented by using an application-specific integrated circuit (application-specific integrated circuit, ASIC) or a field programmable gate array (field programmable gate array, FPGA). Specifically, the network processor 2132 is configured to forward a received packet based on a forwarding table stored in the forwarding entry memory 2134. If a destination address of the packet is an address of the Ethernet device 2100, the network processor sends the packet to a CPU (for example, the central processing unit 2131) for processing. If a destination address of the packet is not an address of the Ethernet device 2100, the network processor searches, based on the destination address, the forwarding table for a next hop and an outbound interface corresponding to the destination address, and forwards the packet to the outbound interface corresponding to the destination address. Processing of an uplink packet may include: processing of an inbound interface of the packet and forwarding table lookup; and processing of a downlink packet may include: forwarding table lookup and the like. In some embodiments, the central processing unit may alternatively perform a function of the forwarding chip, for example, implement software forwarding based on a general-purpose CPU. Therefore, the forwarding chip is not needed in the interface board.

The physical interface card 2133 is configured to implement a physical layer interconnection function, so that original traffic enters the interface board 2130 from the physical interface card, and a processed packet is sent out from the physical interface card 2133. The physical interface card 2133 is also referred to as a subcard, may be installed on the interface board 2130, and is responsible for converting an optical/electrical signal into a packet, performing validity check on the packet, and then forwarding the packet to the network processor 2132 for processing. In some embodiments, the central processing unit 2131 may alternatively perform a function of the network processor 2132, for example, implement software forwarding based on a general-purpose CPU. Therefore, the network processor 2132 is not needed in the physical interface card 2133.

Optionally, the Ethernet device 2100 includes a plurality of interface boards. For example, the Ethernet device 2100 further includes an interface board 2140. The interface board 2140 includes: a central processing unit 2141, a network processor 2142, a forwarding entry memory 2144, and a physical interface card 2143. Functions and implementations of components in the interface board 2140 are the same as or similar to those of the interface board 2130. Details are not described herein again.

Optionally, the Ethernet device 2100 further includes a switching board 2120. The switching board 2120 may also be referred to as a switch fabric unit (switch fabric unit, SFU). When the network device 2100 has the plurality of interface boards, the switching board 2120 is configured to perform data exchange between the interface boards. For example, the interface board 2130 and the interface board 2140 may communicate with each other by using the switching board 2120.

The main control board 2110 is coupled to the interface board. For example, the main control board 2110, the interface board 2130, the interface board 2140, and the switching board 2120 are connected to a system backboard by using a system bus to implement interworking. In a possible implementation, an inter-process communication (inter-process communication, IPC) protocol lane is established between the main control board 2110, the interface board 2130, and the interface board 2140, and the main control board 2110, the interface board 2130, and the interface board 2140 communicate with each other through the IPC lane.

Logically, the Ethernet device 2100 includes a control plane and a forwarding plane. The control plane includes the main control board 2110 and the central processing unit 2111. The forwarding plane includes components that perform forwarding, such as the forwarding entry memory 2134, the physical interface card 2133, and the network processor 2132. The control plane performs functions such as a function of a router, a function of generating a forwarding table, a function of processing signaling and protocol packets, and a function of configuring and maintaining a state of the network device. The control plane delivers the generated forwarding table to the forwarding plane. On the forwarding plane, the network processor 2132 searches, based on the forwarding table delivered by the control plane, a table for forwarding the packet received by the physical interface card 2133. The forwarding table delivered by the control plane may be stored in the forwarding entry memory 2134. In some embodiments, the control plane and the forwarding plane may be completely separated, and are not on a same network device.

It should be noted that there may be one or more main control boards, and when there are a plurality of main control boards, a primary main control board and a secondary main control board may be included. There may be one or more interface boards. A network device with a stronger data processing capability provides a larger quantity of interface boards. There may also be one or more physical interface cards on the interface board. There may be no switching board or one or more switching boards. When there are a plurality of switching boards, load balancing and redundancy backup may be implemented together. In a centralized forwarding architecture, the network device may not need a switching board, and the interface board provides a function of processing service data of an entire system. In a distributed forwarding architecture, the network device may have at least one switching board, and data exchange between a plurality of interface boards is implemented by using the switching board, to provide a large-capacity data exchange and processing capability. Therefore, a data access and processing capability of the network device in the distributed architecture is greater than that of the network device in the centralized architecture. Optionally, a form of the network device may alternatively be a single board. To be specific, there is no switching board, and functions of the interface board and the main control board are integrated into the board. In this case, the central processing unit on the interface board and the central processing unit on the main control board may be combined into one central processing unit on the board, to perform functions obtained by combining the two central processing units. The network device in this form (for example, a network device such as a low-end switch or router) has a low data exchange and processing capability. A specific architecture that is to be used depends on a specific networking deployment scenario. This is not limited herein.

In a specific embodiment, the Ethernet device 2100 corresponds to the Ethernet device shown in FIG. 10 or FIG. 11.

For example, the Ethernet device 2100 may be the Ethernet device shown in FIG. 10 or FIG. 11, which is an Ethernet forwarding device such as a switch or a router. In this case, an Ethernet chip that performs the method shown in FIG. 3, FIG. 8(a), or FIG. 8(b) may be located in the main control board 2110, or may be located in the interface board 2130 or the interface board 2140, and the Ethernet chip may be specifically located in the physical interface card 2133 or 2143.

An embodiment of this application further provides a communication system 3000. The packet processing system includes a first Ethernet device 3001 and a second Ethernet device 3002. Optionally, the first Ethernet device may be an Ethernet device on a sending side, and performs the data sending method shown in FIG. 3. The second Ethernet device may be an Ethernet device on a receiving side, and performs the data receiving method shown in FIG. 8(a) or FIG. 8(b).

An embodiment of this application further provides a computer-readable storage medium. The storage medium stores at least one instruction, and the instruction is loaded and executed by a processor, to enable a computer to implement any one of the foregoing data sending method or the foregoing data receiving method.

An embodiment of this application further provides a computer program (product). When the computer program is executed by a computer, a processor or the computer may be enabled to perform corresponding steps and/or procedures in the foregoing method embodiments.

An embodiment of this application further provides a chip, including: a processor, configured to: invoke, from a memory, instructions stored in the memory and run the instructions, to enable a communication device in which the chip is installed to perform any one of the foregoing data sending method or the foregoing data receiving method.

An embodiment of this application further provides another chip, including an input interface, an output interface, a processor, and a memory. The input interface, the output interface, the processor, and the memory are connected through an internal connection path. The processor is configured to execute code in the memory. When the code is executed, the processor is configured to perform any one of the foregoing data sending method or the foregoing data receiving method.

All or some of the foregoing embodiments may be implemented by software, hardware, firmware, or any combination thereof. When software is used to implement embodiments, all or some of embodiments may be implemented in a form of a computer program product. The computer program product includes one or more computer instructions. When the computer program instructions are loaded and executed on a computer, the procedure or functions according to this application are completely or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state disk (solid-state disk)), or the like.

A person of ordinary skill in the art may be aware that, method steps and modules described with reference to embodiments disclosed in this specification can be implemented by using software, hardware, firmware, or any combination thereof. To clearly describe interchangeability between the hardware and the software, steps and compositions of embodiments have been generally described in terms of functions in the foregoing descriptions. Whether the functions are performed by hardware or software depends on particular applications and design constraint conditions of the technical solutions. A person of ordinary skill in the art may use different methods to implement the described functions for each particular application, but it should not be considered that the implementation goes beyond the scope of this application.

A person of ordinary skill in the art may understand that all or some of the steps of embodiments may be implemented by hardware or a program instructing related hardware. The program may be stored in a computer-readable storage medium. The storage medium may include: a read-only memory, a magnetic disk, or an optical disc.

When software is used to implement embodiments, all or some of embodiments may be implemented in a form of a computer program product. The computer program product includes one or more computer program instructions. In an example, the method according to embodiments of this application may be described in a context of machine-executable instructions. For example, the machine-executable instructions are included in a program module that is in a device for execution on a real or virtual processor of a target. Usually, the program module includes a routine, a program, a library, an object, a class, a component, a data structure, and the like, and executes a specific task or implements a specific abstract data structure. In various embodiments, functions of the program modules may be combined or split between the described program modules. The machine-executable instructions for the program module may be executed locally or within a distributed device. In the distributed device, the program module may be located in both a local storage medium and a remote storage medium.

Computer program code for implementing the method in embodiments of this application may be written in one or more programming languages. The computer program code may be provided for a processor of a general-purpose computer, a dedicated computer, or another programmable data processing apparatus, so that when the program code is executed by the computer or the another programmable data processing apparatus, functions/operations specified in the flowcharts and/or block diagrams are implemented. The program code may be executed completely on the computer, partially on the computer, as an independent software package, partially on the computer and partially on a remote computer, or completely on the remote computer or server.

In the context of embodiments of this application, the computer program code or related data may be carried in any appropriate carrier, so that the device, the apparatus, or the processor can perform various processing and operations described above. Examples of the carrier include a signal, a computer-readable medium, and the like.

Examples of the signal may include an electrical signal, an optical signal, a radio signal, a voice signal, or other forms of propagated signals, such as a carrier wave and an infrared signal.

A machine-readable medium may be any tangible medium that includes or stores programs used for or related to an instruction execution system, apparatus, or device. The machine-readable medium may be a machine-readable signal medium or a machine-readable storage medium. The machine-readable medium may include but is not limited to an electronic, magnetic, optical, electromagnetic, infrared, or semiconductor system, apparatus, or device, or any appropriate combination thereof. A more detailed example of the machine-readable storage medium includes an electrical connection with one or more wires, a portable computer disk, a hard disk, a random access memory (RAM), a read-only memory (ROM), an erasable programmable read-only memory (EPROM or flash memory), an optical storage device, a magnetic storage device, or any appropriate combination thereof.

It may be clearly understood by a person skilled in the art that, for the purpose of convenient and brief description, for a detailed working process of the foregoing system, device, and module, refer to a corresponding process in the foregoing method embodiments. Details are not described herein again.

In the several embodiments provided in this application, it should be understood that the disclosed system, device, and method may be implemented in other manners. For example, the described device embodiment is merely an example. For example, division into modules is merely division into logical functions and there may be other division modes during actual application. For example, a plurality of modules or components may be combined or may be integrated to another system, or some features may be ignored or not executed. In addition, the displayed or discussed mutual couplings or direct couplings or communication connections may be indirect couplings or communication connections implemented through some interfaces, devices, or modules, or may be electrical, mechanical, or other forms of connections.

The modules described as separate components may or may not be physically separate, and components displayed as modules may or may not be physical modules, may be located in one position, or may be distributed on a plurality of network modules. Some or all of the modules may be selected based on an actual requirement to implement the objectives of the solutions of embodiments of this application.

In addition, functional modules in embodiments of this application may be integrated into one processing module, or each of the modules may exist alone physically, or two or more modules may be integrated into one module. The integrated module may be implemented in a form of hardware, or may be implemented in a form of a software functional module.

If the integrated module is implemented in the form of the software functional module and sold or used as an independent product, the integrated module may be stored in a computer-readable storage medium. Based on this understanding, the technical solutions of this application essentially, or the part contributing to a conventional technology, or all or some of the technical solutions may be implemented in a form of a software product. The computer software product is stored in a storage medium, and includes several instructions for instructing a computer device (which may be a personal computer, a server, or a network device) to perform all or some of the steps of the method described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The terms such as "first" and "second" in this application are used to distinguish between same or similar items with basically same roles and functions. It should be understood that there is no logical or timing dependency between "first", "second", and "n^{th}", and neither a quantity nor an execution sequence is limited. It should be further understood that although the terms such as "first" and "second" are used in the following descriptions to describe various elements, these elements should not be limited by the terms. These terms are simply used to distinguish one element from another. For example, without departing from the scope of various examples, a first image may be referred to as a second image, and similarly, the second image may be referred to as the first image. Both the first image and the second image may be images, and in some cases may be separate and different images.

It should be further understood that sequence numbers of processes do not mean execution sequences in embodiments of this application. The execution sequences of the processes should be determined based on functions and internal logic of the processes, and should not be construed as any limitation on the implementation processes of embodiments of this application.

In this application, the term "at least one" means one or more, and the term "a plurality of" in this application means two or more. For example, a plurality of second packets means two or more second packets. The terms "system" and "network" are often used interchangeably in this specification.

It should be understood that the terms used in the descriptions of the various examples herein are merely intended to describe specific examples and are not intended to impose a limitation. The terms "one" ("a" and "an") and "the" of singular forms used in the descriptions of the various examples and the appended claims are also intended to include plural forms, unless otherwise specified in the context clearly.

It should be further understood that the term "and/or" used in this specification indicates and includes any or all possible combinations of one or more of the associated listed items. The term "and/or" describes an association relationship between associated objects and represents that three relationships may exist. For example, A and/or B may represent the following three cases: Only A exists, both A and B exist, and only B exists. In addition, the character "/" in this application usually indicates an "or" relationship between the associated objects.

It should be further understood that the term "include" (also referred to as "includes", "including", "comprises", and/or "comprising") used in this specification specifies presence of the stated features, integers, steps, operations, elements, and/or components, with presence or addition of one or more other features, integers, steps, operations, elements, components, and/or components thereof not excluded.

It should be further understood that the terms "if" and "assuming that" may be interpreted to mean "when" ("when" or "upon") or "in response to determining" or "in response to detecting". Similarly, according to the context, the phrase "if it is determined that" or "if [a stated condition or event] is detected" may be interpreted as a meaning of "when it is determined that", "in response to determining", "when [the stated condition or event] is detected", or "in response to detecting [the stated condition or event]".

It should be understood that determining B based on A does not mean that B is determined based only on A, and B may alternatively be determined based on A and/or other information.

It should be further understood that "one embodiment", "an embodiment", and "a possible implementation" mentioned throughout the specification mean that a specific feature, structure, or characteristic related to the embodiment or an implementation is included in at least one embodiment of this application. Therefore, "in one embodiment" or "in an embodiment" or "a possible implementation" appearing throughout the specification may not necessarily refer to a same embodiment. In addition, these particular features, structures, or characteristics may be combined in one or more embodiments in any appropriate manner.

The foregoing descriptions are merely optional embodiments of this application, but are not intended to limit this application. Any modification, equivalent replacement, or improvement made without departing from the principle of this application should fall within the protection scope of this application.

## Claims

1. A data sending method, wherein the method comprises:
obtaining, by a physical medium attachment PMA sublayer of an Ethernet device, a data stream, wherein the data stream is a forward error correction FEC encoded data stream; and
performing, by the PMA sublayer, a first data processing process on the data stream, to obtain an interleaved data stream, wherein the first data processing process comprises performing interleaving in a first interleaving manner, wherein
an interleaving type of the first interleaving manner is symbol interleaving or convolutional interleaving.

2. The method according to claim 1, wherein the symbol interleaving is performed at a granularity of 10 bits.

3. The method according to claim 1 or 2, wherein the first data processing process further comprises bit multiplexing or symbol-group multiplexing.

4. The method according to any one of claims 1 to 3, wherein before the performing interleaving in a first interleaving manner, the first data processing process further comprises bit demultiplexing or symbol-group demultiplexing.

5. The method according to any one of claims 1 to 4, wherein before the performing interleaving in a first interleaving manner, the first data processing process further comprises alignment marker AM lock and deskew.

6. The method according to any one of claims 1 to 5, wherein
the data stream is a data stream obtained by performing a second data processing process, and the second data processing process comprises performing interleaving in a second interleaving manner.

7. The method according to claim 6, wherein an interleaving depth of the first interleaving manner is different from that of the second interleaving manner.

8. The method according to claim 6 or 7, wherein the interleaving depth of the second interleaving manner is 2×RS.

9. The method according to any one of claims 6 to 8, wherein the first data processing process further comprises performing de-interleaving for the second interleaving manner.

10. The method according to any one of claims 6 to 9, wherein
the second data processing process is performed by a physical coding sublayer PCS or a data terminal equipment extender sublayer DTE_XS.

11. The method according to any one of claims 1 to 10, wherein the interleaving depth of the first interleaving manner is 4×RS.

12. The method according to any one of claims 1 to 11, wherein the Ethernet device comprises at least one of the following: a physical layer PHY chip, a forwarding device, or a pluggable module.

13. The method according to any one of claims 1 to 12, wherein a lane rate of the interleaved data stream is 200 gigabits per second Gbps.

14. The method according to any one of claims 1 to 13, wherein a rate of an interface for receiving the data stream by the PMA sublayer is at least one of the following: 200 Gbps or 400 Gbps.

15. The method according to any one of claims 1 to 14, wherein the data stream is obtained from an attachment unit interface AUI or a common electrical interface CEI by the PMA sublayer.

16. The method according to any one of claims 1 to 15, wherein the method further comprises:
sending, by the PMA sublayer, the interleaved data stream to a physical medium dependent PMD sublayer.

17. A data receiving method, wherein the method comprises:
obtaining, by a physical medium attachment PMA sublayer of an Ethernet device, a data stream, wherein the data stream is a forward error correction FEC encoded data stream; and
performing, by the PMA sublayer, a third data processing process on the data stream, to obtain an interleaved data stream, wherein the third data processing process comprises performing interleaving on the data stream, wherein
an interleaving type of the interleaving is symbol interleaving or convolutional interleaving.

18. The method according to claim 17, wherein the symbol interleaving is performed at a granularity of 10 bits.

19. The method according to claim 17 or 18, wherein the interleaved data stream is de-interleaved by a physical coding sublayer PCS or a data terminal equipment extender sublayer DTE_XS.

20. The method according to any one of claims 17 to 19, wherein an interleaving depth of the interleaving is 2×RS.

21. The method according to any one of claims 17 to 20, wherein the third data processing process further comprises bit demultiplexing or symbol-group demultiplexing.

22. The method according to any one of claims 17 to 21, wherein the third data processing process further comprises alignment marker AM lock and deskew.

23. The method according to any one of claims 17 to 22, wherein the third data processing process further comprises bit multiplexing or symbol-group multiplexing.

24. The method according to any one of claims 17 to 23, wherein the Ethernet device comprises at least one of the following: a physical layer PHY chip, a forwarding device, or a pluggable module.

25. A data receiving method, comprising
obtaining, by a physical medium attachment PMA sublayer of an Ethernet device, a data stream, wherein the data stream is a forward error correction FEC encoded data stream; and
performing, by the PMA sublayer, a third data processing process on the data stream, to obtain a de-interleaved data stream, wherein the third data processing process comprises performing de-interleaving in a first de-interleaving manner, wherein
a de-interleaving type of the first de-interleaving manner is symbol de-interleaving or convolutional de-interleaving.

26. The method according to claim 25, wherein the symbol de-interleaving is performed at a granularity of 10 bits.

27. The method according to claim 25 or 26, wherein the third data processing process comprises bit multiplexing or symbol-group multiplexing.

28. The method according to any one of claims 25 to 27, wherein the third data processing process comprises bit demultiplexing or symbol-group demultiplexing.

29. The method according to any one of claims 25 to 28, wherein the third data processing process comprises alignment marker AM lock and deskew.

30. The method according to any one of claims 25 to 28, wherein after the performing, by the PMA sublayer, a third data processing process on the data stream, the method further comprises:
performing, by the PMA sublayer, interleaving on the de-interleaved data stream in a second interleaving manner, to obtain a re-interleaved data stream.

31. The method according to claim 30, wherein the re-interleaved data stream is de-interleaved by a physical coding sublayer PCS or a data terminal equipment extender sublayer DTE_XS.

32. The method according to any one of claims 25 to 31, wherein an interleaving depth of the first de-interleaving manner is 4×RS.

33. The method according to any one of claims 25 to 32, wherein the Ethernet device comprises at least one of the following: a physical layer PHY chip, a forwarding device, or a pluggable module.

34. The method according to any one of claims 25 to 33, wherein the obtaining, by a PMA sublayer, a data stream comprises:
obtaining, by the PMA sublayer, an interleaved data stream from a physical medium dependent PMD sublayer.

35. An Ethernet device, wherein the Ethernet device is configured to perform the method according to any one of claims 1 to 16, 17 to 24, or 25 to 34.

36. A chip, wherein the chip is configured to perform the method according to any one of claims 1 to 16, 17 to 24, or 25 to 34.

37. A communication system, wherein the communication system comprising a first Ethernet device and a second Ethernet device, wherein
the first Ethernet device is configured to perform the method according to any one of claims 1 to 16, and the second Ethernet device is configured to perform the method according to any one of claims 17 to 24; or
the first Ethernet device is configured to perform the method according to any one of claims 1 to 16, and the second Ethernet device is configured to perform the method according to any one of claims 25 to 34.
